(19) Europäisches Patentamt
European Patent Office
Office européen des brevets

(11) **EP 4 481 593 B1**

(12) **EUROPEAN PATENT SPECIFICATION**

(45) Date of publication and mention
of the grant of the patent:
**27.05.2026 Bulletin 2026/22**

(21) Application number: **24179063.3**

(22) Date of filing: **30.05.2024**

(51) International Patent Classification (IPC):
*G06F 18/25* (2023.01)    *G06V 10/25* (2022.01)
*G06V 20/58* (2022.01)    *G06V 10/62* (2022.01)
*G06V 20/56* (2022.01)    *G06V 20/54* (2022.01)

(52) Cooperative Patent Classification (CPC):
**G06V 20/58; G06F 18/254; G06V 10/25;**
**G06V 10/62; G06V 20/54**

(54) **DETECTION DEVICE, POSITION CALCULATION SYSTEM, AND DETECTION METHOD**

DETEKTIONSVORRICHTUNG, POSITIONSBERECHNNUNGSSYSTEM UND DETEKTIONSVERFAHREN

DISPOSITIF DE DÉTECTION, SYSTÈME DE CALCUL DE POSITION ET PROCÉDÉ DE DÉTECTION

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priority: **19.06.2023 JP 2023099794**

(43) Date of publication of application:
**25.12.2024 Bulletin 2024/52**

(73) Proprietor: **TOYOTA JIDOSHA KABUSHIKI KAISHA**
**Aichi-ken 471-8571 (JP)**

(72) Inventors:
• **IWAHORI, Kento**
**471- 8571 Toyota-shi (JP)**
• **YOKOYAMA, Daiki**
**471- 8571 Toyota-shi (JP)**

(74) Representative: **J A Kemp LLP**
**80 Turnmill Street**
**London EC1M 5QU (GB)**

(56) References cited:
**WO-A1-2022/155671    US-A1- 2017 345 180**

• **LEIBE B ET AL: "Coupled Object Detection and Tracking from Static Cameras and Moving Vehicles", IEEE TRANSACTIONS ON PATTERN ANALYSIS AND MACHINE INTELLIGENCE, IEEE COMPUTER SOCIETY, USA, vol. 30, no. 10, 1 October 2008 (2008-10-01), pages 1683 - 1698, XP011229329, ISSN: 0162-8828, DOI: 10.1109/ TPAMI.2008.170**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

BACKGROUND

FIELD

The present disclosure relates to a detection device, a position calculation system, and a detection method.

RELATED ART

Vehicles that run by unmanned driving have hitherto been known (Japanese Laid-Open Patent Application (PCT Application) Publication No. 2017-538619).

In some cases, in order to cause a moving object such as a vehicle to move by unmanned driving, images of the moving object are taken from the outside. However, the inventors have found that the accuracy of detection of the moving object in captured images may decrease due to differences of the exterior shape of the moving object depending on the body type.

Acknowledged is the following prior art:

D1 WO 2022/155671 A1 (ARGO AI LLC [US]) 21 July 2022 (2022-07-21) §

D2 LEIBE B ET AL: "Coupled Object Detection and Tracking from Static Cameras and Moving Vehicles", IEEE TRANSACTIONS ON PATTERN ANALYSIS AND MACHINE INTELLIGENCE, IEEE COMPUTER SOCIETY, USA, vol. 30, no. 10, 1 October 2008 (2008-10-01), pages 1683-1698, XP011229329, ISSN: 0162-8828, DOI: 10.1109/TPAMI.2008.170

D3 US 2017/345180 A1 (SUGIURA TAKAYUKI [JP]) 30 November 2017 (2017-11-30)

SUMMARY

The invention is defined by the independent claims. Further aspects and preferred embodiments are defined in the dependent claims. Any aspects, embodiments and examples of the present disclosure which do not fall under the scope of the appended claims do not form part of the invention and are merely provided for illustrative purposes. The present disclosure may be realized by the following aspects where the moving object is a vehicle.

(1) According to a first aspect of the present disclosure, a detection device that detects a moving object included in a captured image is provided. The detection device comprises: an image acquisition unit that acquires the captured image; a type acquisition unit that acquires type information indicating one body type of the moving object included in the captured image, the one body type being classified according to an exterior shape of the moving object; a model acquisition unit that acquires, from among a plurality of first detection models each of which is a machine learning model prepared for each of the one body type, the first detection model selected according to the one body type identified by the type information acquired by the type acquisition unit; and a detection unit that detects the moving object included in the captured image by inputting the captured image to the first detection model acquired by the model acquisition unit and identifying a target region indicating the moving object in the captured image. According to the above aspect, it is possible to acquire the type information indicating one body type of the moving object included in the captured image, and acquire the first detection model selected according to the one body type identified by the acquired type information from among a plurality of first detection models prepared for the respective one body types. Then, by inputting the captured image to the first detection model according to the body type of the moving object included in the captured image, the moving object included in the captured image can be accurately detected. That is, by using the first detection model suitable for the detection of the moving object classified into one body type, the respective regions that constitute the captured image can be accurately classified into target regions and regions other than target regions. This can suppress a decrease in accuracy in the detection of the moving object included in the captured image depending on the body type of the moving object.

(2) In the above-described aspect, each of the plurality of first detection models is trained in advance to identify the target region by inputting a plurality of training images including M (M is an integer of 2 or more) first training images each containing the moving object classified into the one body type and N (N is an integer of 0 or more and less than M) second training images each containing the moving object classified into another type of the body type different from the one body type. According to the above aspect, the first detection model suitable for the detection of the moving object classified into one body type can be prepared for each one body type, and such a first detection model is trained with more first training images containing moving objects classified into one body type than the second training images containing moving objects classified into another body type other than the one body type.

(3) According to a second aspect of the present disclosure, a detection device that detects a moving object included in a captured image is provided. The detection device comprises: an image acquisition unit that acquires the captured image; a type acquisition unit that acquires type information indicating one body type of the moving object included in the captured image, the one body type being classified according to an exterior shape of the moving object; and a detection unit that detects the moving object included in the captured image by inputting the captured image and the one body type identified by the type information acquired by the type acquisition unit to a second detection model being a machine learning model and identifying a target region indicating the moving object in the captured image. According to the above aspect, it is possible to accurately detect the moving object included in the captured image by inputting the captured image associated with the one body type to the second detection model. That is, the respective regions that constitute the captured image can be accurately classified into target regions and regions other than target regions. This can suppress a decrease in accuracy in the detection of the moving object included in the captured image depending on the body type of the moving object.

(4) In the above-described aspect, the second detection model is trained in advance to identify the target region by inputting a plurality of training images containing the moving object and a type correct answer label, the type correct answer label being associated with each of the plurality of training images and indicating the body type of the moving object included in the training images. According to the above aspect, it is possible to prepare the second detection model that is trained by associating a plurality of training images containing the moving objects and type correct answer labels indicating the body types of the moving objects included in the respective training images.

(5) In the above-described aspect, a region correct answer label indicating either the target region or an out-of-target region indicating other than the moving object is associated with each region in the training images. According to the above aspect, the respective regions that constitute the captured image can be accurately classified into target regions and regions other than target regions. This can improve the accuracy in the detection of the moving object included in the captured image.

(6) In the above-described aspect, the body type indicates a type of the moving object. According to the above aspect, it is possible to detect the moving object included in the captured image using either the first detection model or the second detection model that has learned the difference in the exterior shape of the moving object that varies depending on the type of the moving object. This can improve the accuracy in the detection of the moving object included in the captured image.

(7) In the above-described aspect, the moving object moves by receiving a movement condition that defines a movement operation of the moving object from outside the moving object, and the type acquisition unit acquires the type information by identifying the one body type of the moving object included in the captured image using schedule information, the schedule information being associated with each imaging range of the plurality of imaging devices that acquire the captured image and indicating a scheduled time at which the moving object classified into the one body type moves in the imaging range. According to the above aspect, it is possible to acquire type information regarding the moving object included in the captured image by identifying one body type of the moving object included in the captured image using the schedule information.

(8) In the above-described aspect, the type acquisition unit acquires the type information by inputting the captured image to an identification model being a machine learning model that has been trained to output the type information when the captured image is input. According to the above aspect, it is possible to acquire the type information regarding the moving object included in the captured image by inputting the captured image to an identification model that is trained to output the type information regarding the moving object included in the captured image.

(9) In the above-described aspect, the detection device may further comprise a rotation processing unit that rotates the captured image such that a movement direction of the moving object faces a predetermined direction. According to the above aspect, the captured image can be rotated such that the direction of the vector indicating the movement direction of the moving object faces a predetermined direction. In this way, the moving object included in the captured image can be detected with the direction of the vector indicating the movement direction of the moving object unified. This can improve the accuracy in the detection of the moving object included in the captured image.

(10) In the above-described aspect, the detection device may further comprise a distortion correction unit that corrects distortion of the captured image. According to the above aspect, the distortion of the captured image can be corrected. This can improve the accuracy in the detection of the moving object included in the captured image.

(11) According to a third aspect of the present disclosure, a position calculation system for calculating a position of a moving object included in a captured image is provided. The position calculation system comprises: the detection device according to the above aspect; and a position calculation device that calculates the position of the moving object, wherein the detection device further masks a target region being a region indicating the moving object in the captured image, thereby generating a first mask image in which a mask region is added to the target region, and the position calculation device comprises: a perspective transformation unit that generates a second mask image by performing perspective transformation of the first mask image; a coordinate point calculation unit that calculates a local coordinate point indicating a position of the moving object in a local coordinate system by correcting a first coordinate point using a second coordinate point, the first coordinate point being a specified vertex of a first bounding rectangle set in the mask region in the first mask image, the second coordinate point being a vertex indicating the same position as the first coordinate point in a second bounding rectangle set in the mask region in the second mask image; and a position transformation unit that transforms the local coordinate point into a moving object coordinate point indicating a position of the moving object in a global coordinate system using a distance of an imaging device from a reference point calculated based on a position of the imaging device in the global coordinate system and a distance of a predetermined positioning point of the moving object from the reference point. According to the above aspect, it is possible to generate the first mask image in which the target region indicating the moving object is masked in each region constituting the captured image, and the second mask image with the perspective-transformed first mask image. In this way, it is possible to calculate the local coordinate point by extracting the first coordinate point from the first mask image and the second coordinate point from the second mask image. This allows for more accurate calculation of local coordinate points. This can improve the accuracy in the calculation of the position of the moving object.

(12) According to a fourth aspect of the present disclosure, a detection method of detecting a moving object included in a captured image is provided. The detection method comprises: an image acquisition step of acquiring the captured image; a type acquisition step of identifying the body type of the moving object included in the captured image, the body type being classified according to an exterior shape of the moving object; a model acquisition step of acquiring, from among a plurality of first detection models each of which is a machine learning model prepared for each of the one body type, the first detection model selected according to the body type identified in the type acquisition step; and a detection step of detecting the moving object included in the captured image by inputting the captured image to the first detection model acquired in the model acquisition step and identifying a target region indicating the moving object in the captured image. According to the above aspect, it is possible to acquire the type information indicating one body type of the moving object included in the captured image, and acquire the first detection model selected according to the one body type identified by the acquired type information from among a plurality of first detection models prepared for the respective one body types. Then, by inputting the captured image to the first detection model according to the body type of the moving object included in the captured image, the moving object included in the captured image can be accurately detected. That is, by using the first detection model suitable for the detection of the moving object classified into one body type, the respective regions that constitute the captured image can be accurately classified into target regions and regions other than target regions. This can suppress a decrease in accuracy in the detection of the moving object included in the captured image depending on the body type of the moving object.

(13) According to a fifth aspect of the present disclosure, a detection method of detecting a moving object included in a captured image is provided. This detection method comprises: an image acquisition step of acquiring the captured image; a type acquisition step of acquiring type information indicating one body type of the moving object included in the captured image, the one body type being classified according to an exterior shape of the moving object; and a detection step of detecting the moving object included in the captured image by inputting the captured image and the one body type identified by the type information acquired in the type acquisition step to a second detection model being a machine learning model and identifying a target region indicating the moving object in the captured image. According to the above aspect, it is possible to accurately detect the moving object included in the captured image by inputting the captured image associated with the one body type to the second detection model. That is, the respective regions that constitute the captured image can be accurately classified into target regions and regions other than target regions. This can suppress a decrease in accuracy in the detection of the moving object included in the captured image depending on the body type of the moving object.

The present disclosure can be realized by various aspects other than the detection device, the position calculation system, and the detection method described above. For example, the present disclosure may be embodied in aspects of methods for producing a moving object, a detection device, and a position calculation system, a position calculation method, methods for controlling a detection device and a position calculation system, computer programs that execute the control method, as well as non-transitory storage mediums storing the computer programs, and the like.

BRIEF DESCRIPTION OF THE DRAWINGS

Fig. 1 is a diagram showing a schematic structure of a position calculation system according to a first embodiment;

Fig. 2 is a diagram showing a schematic structure of a detection device according to the first embodiment;

Fig. 3 is a diagram showing details of a CPU mounted on the detection device according to the first embodiment;

Fig. 4 is a diagram showing a schematic structure of a position calculation device;

Fig. 5 is a diagram showing a schematic structure of a remote control device;

Fig. 6 is a flowchart showing a detection method and a position calculation method according to the first embodiment;

Fig. 7 is a schematic diagram showing examples of various images;

Fig. 8 is a diagram for explaining details of a coordinate point calculation step;

Fig. 9 is a diagram for explaining a method for acquiring base coordinate points;

Fig. 10 is a first diagram for explaining details of a position transformation step;

Fig. 11 is a second diagram for explaining details of a position transformation step;

Fig. 12A is a flowchart of procedures in a process of running control of a vehicle according to the first embodiment;

Fig. 12B is a flowchart showing a vehicle operation control method;

Fig. 13 is a diagram showing a schematic structure of a detection device according to a second embodiment;

Fig. 14 is a diagram showing details of a CPU mounted on the detection device according to the second embodiment;

Fig. 15 is a flowchart showing a detection method and a position calculation method according to the second embodiment;

Fig. 16 is a diagram showing a schematic structure of a position calculation system according to a third embodiment;

Fig. 17 is a diagram showing a schematic structure of a vehicle control device according to the third embodiment; and

Fig. 18 is a flowchart of procedures in the process of running control of a vehicle according to the third embodiment.

DETAILED DESCRIPTION

A. First Embodiment

A-1. Structure of Position Calculation System

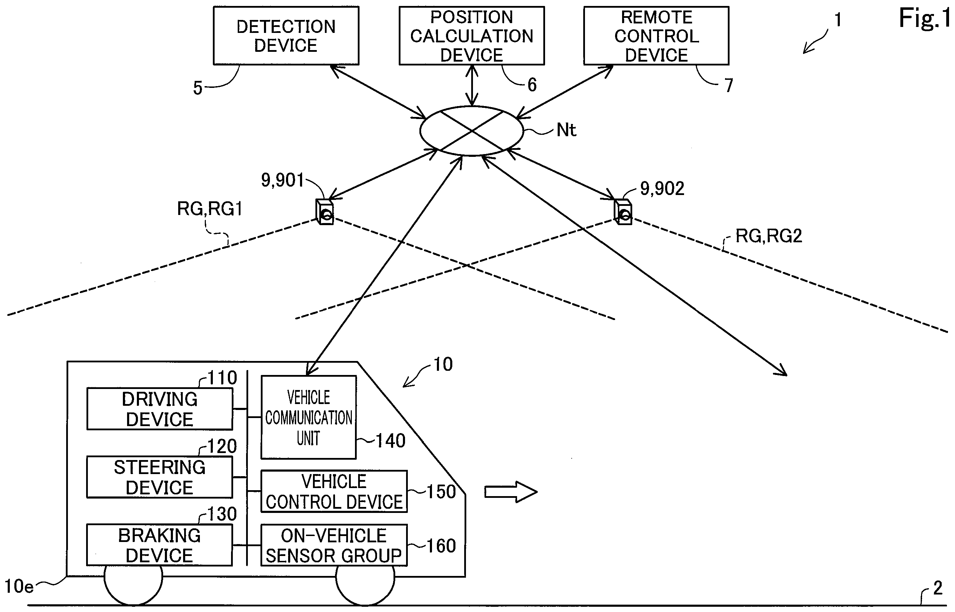

Fig. 1 is a diagram showing a schematic structure of a position calculation system 1. The position calculation system 1 detects a vehicle 10 included in a captured image, and calculates the position of the vehicle 10. In the present disclosure, the captured image is at least one of an original image as raw data acquired by an imaging device 9, which is an external device provided at a location different from that of the vehicle 10, a corrected image, a rotated image, and a processed image that are obtained by processing the original image. The details of the corrected image, the rotated image, and the processed image are described later. The position calculation system 1 includes one or more vehicles 10, a detection device 5 that detects the vehicle 10 included in a captured image, and a position calculation device 6 that calculates the position of the vehicle 10 using the detection results of the detection device 5.

The vehicle 10 is an example of a moving object. In the present disclosure, the "moving object" means an object capable of moving, and is a vehicle or an electric vertical takeoff and landing aircraft (so-called flying-automobile), for example. The vehicle may be a vehicle to run with a wheel or may be a vehicle to run with a continuous track, and may be a passenger car, a track, a bus, a two-wheel vehicle, a four-wheel vehicle, a construction vehicle, or a combat vehicle, for example. The vehicle includes a battery electric vehicle (BEV), a gasoline automobile, a hybrid automobile, and a fuel cell automobile. When the moving object is other than a vehicle, the term "vehicle" or "car" in the present disclosure is replaceable with a "moving object" as appropriate, and the term "run" is replaceable with "move" as appropriate.

The vehicle 10 is configured to be capable of running by unmanned driving. The "unmanned driving" means driving independent of running operation by a passenger. The running operation means operation relating to at least one of "run," "turn," and "stop" of the vehicle 10. The unmanned driving is realized by automatic remote control or manual remote control using a device provided outside the vehicle 10 or by autonomous control by the vehicle 10. A passenger not involved in running operation may be on-board a vehicle running by the unmanned driving. The passenger not involved in running operation includes a person simply sitting in a seat of the vehicle 10 and a person doing work such as assembly, inspection, or operation of switches different from running operation while on-board the vehicle 10. Driving by running operation by a passenger may also be called "manned driving."

In the present specification, the "remote control" includes "complete remote control" by which all motions of the vehicle 10 are completely determined from outside the vehicle 10, and "partial remote control" by which some of the motions of the vehicle 10 are determined from outside the vehicle 10. The "autonomous control" includes "complete autonomous control" by which the vehicle 10 controls a motion of the vehicle 10 autonomously without receiving any information from a device outside the vehicle 10, and "partial autonomous control" by which the vehicle 10 controls a motion of the vehicle 10 autonomously using information received from a device outside the vehicle 10.

The imaging device 9 acquires the original image by capturing an imaging range RG including the vehicle 10 subjected to position calculation from outside of the vehicle 10. In the present embodiment, the imaging device 9 transmits the acquired original image to the detection device 5, together with the camera identification information and the acquisition time of the original image. The camera identification information is information such as a camera ID that identifies each of a plurality of imaging devices 9, or the like. The original image is a two-dimensional image made up of assembled pixels arranged in the XcYc plane of the camera coordinate system. The camera coordinate system is a coordinate system using the focal point of the imaging device 9 as the origin and having the coordinate axes indicated by the Xc axis and the Yc axis, which is orthogonal to the Xc axis. The original image contains at least two-dimensional data of the vehicle 10 subjected to the position calculation. The original image is preferably a color image, but may also be a gray image. The imaging device 9 is, for example, a camera equipped with an imaging element such as a CCD image sensor or CMOS image sensor, and an optical system.

In the present embodiment, the imaging device 9 acquires original images of a track 2 and the vehicle 10 running on the track 2 from an overhead view. The location and number of the imaging devices 9 are determined by considering the imaging range RG (angle of view) or the like of each imaging device 9 so as to capture the entire track 2 by the one or more imaging devices 9. Specifically, the imaging devices 9 are installed so that a first imaging range RG1, which is the imaging range RG of a first imaging device 901, and a second imaging range RG2, which is the imaging range RG of a second imaging device 902, overlap. The first imaging device 901 and the second imaging device 902 are adjacent to each other. Further, each imaging device 9 is installed at a position where an image of a predetermined positioning point 10e for a specific portion of the vehicle 10 running on the track 2 can be captured. In the present embodiment, the positioning point 10e is the rear end in the left side surface (hereinafter referred to as a left rear end) of the vehicle 10. The positioning point 10e may be a portion other than the left rear end of the vehicle 10. The imaging device 9 may also acquire information from the front, rear, side, etc. of the vehicle 10, in addition to the information from above the vehicle 10.

The vehicle 10 has a manned driving mode and a remote unmanned driving mode. In the manned driving mode, the running of the vehicle 10 is achieved by the manned driving described above. Specifically, in the manned driving mode, the running conditions of the vehicle 10 are generated by the driver on the vehicle 10 operating the steering wheel, the accelerator, and other input devices provided in the vehicle 10. By such operations, the vehicle 10 runs according to the generated running conditions. The running conditions mean conditions that specify the running operation of the vehicle 10. The running conditions include, for example, the running route, position/location, running speed, acceleration, and steering angle of the wheels of the vehicle 10. The remote unmanned driving mode has a remote manual driving mode and a remote automatic driving mode. In the remote manual driving mode, the running conditions of the vehicle 10 are generated by an operator operating an operator input device provided at a location different from that of the vehicle 10. The vehicle 10 thereby receives the running conditions generated by the operator input device and runs according to the received running conditions. The operator here corresponds to an external operator, which is described later. In the remote automatic driving mode, a remote control device 7 provided at a location different from that of the vehicle 10 creates control values that specify running operation of the vehicle 10 and transmits the control values to the vehicle 10. The vehicle 10 then receives the control values and performs automatic running according to the received control values. Specifically, in the remote automatic driving mode in the present embodiment, the remote control device 7 generates running control signals, which are described later, and transmits the running control signals to the vehicle 10. The running control signals contain control values that specify running operation, and represent running conditions.

The vehicle 10 runs in the remote automatic driving mode in a factory where the vehicle 10 is produced, for example, by executing a plurality of production steps. The factory is not limited to those present in a single building or those present at one property or one address. The factory may be present across multiple buildings, multiple properties, multiple addresses, and the like. At this time, the vehicle 10 may run not only on private roads but also on public roads. The vehicle 10 may run outside the factory by the remote unmanned driving mode.

The vehicle 10 is, for example, an electric vehicle, a hybrid vehicle, a fuel cell vehicle, a gasoline vehicle, or a diesel vehicle. The vehicle 10 may be a private vehicle such as a passenger car, and may also be a business-purpose vehicle such as a truck, a bus, a construction vehicle, and the like. The vehicle 10 may be at least one of a completed product, a semi-finished product, and an in-process product.

The vehicle 10 includes a driving device 110 for accelerating the vehicle 10, a steering device 120 for changing the traveling direction of the vehicle 10, and a braking device 130 for decelerating the vehicle 10. The driving device 110, the steering device 120, and the braking device 130 each include various actuators for causing the vehicle 100 to run. The vehicle 10 also includes a vehicle communication unit 140 for enabling communication with external devices via wireless communication, or the like, a vehicle control device 150, and an on-vehicle sensor group 160. The external devices refer to devices other than the own vehicle 10, such as the detection device 5, the position calculation device 6, the remote control device 7, the imaging device 9, etc., and another vehicle 10. The vehicle communication unit 140 is, for example, a wireless communication device. The vehicle communication unit 140 communicates with the external devices connected to a network Nt, for example, via an access point in the factory. The vehicle control device 150 has a CPU, a storage unit, and an input/output interface. In the vehicle control device 150, the CPU, the storage unit, and the input/output interface are connected to one another, for example, via an internal bus or interface circuit. The input/output interface communicates with internal devices, such as the driving device 110 mounted on the own vehicle 10. The input/output interface is communicatively connected to the vehicle communication unit 140. The on-vehicle sensor group 160 includes, for example, an on-vehicle camera, an on-vehicle radar, and an on-vehicle LiDAR, as sensors that acquire surrounding information indicating the state of the surrounding area of the vehicle 10. The on-vehicle camera captures the state of the surrounding area of the vehicle 10. The on-vehicle radar and the on-vehicle LiDAR detect objects present in the surrounding area of the vehicle 10. The structure of the vehicle 10 is not limited to that described above.

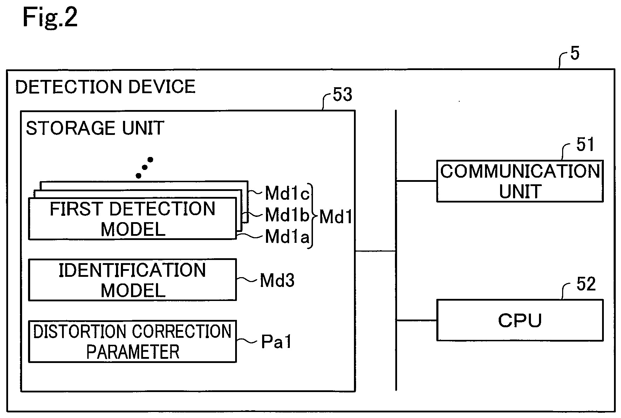

Fig. 2 shows a schematic structure of the detection device 5 in the first embodiment. The detection device 5 detects at least the outer shape (contour) of the vehicle 10 included in the captured image by identifying the target region that is the region indicating the vehicle 10, from among the regions of the captured image. The detection device 5 has a communication unit 51, a storage unit 53, and a CPU 52. In the detection device 5, the communication unit 51, the storage unit 53, and the CPU 52 are connected to one another, for example, via an internal bus or interface circuit.

The communication unit 51 of the detection device 5 communicatively connects other devices, such as the vehicle control device 150, the position calculation device 6, the remote control device 7, the imaging device 9, and the like, with the detection device 5. The communication unit 51 of the detection device 5 is, for example, a wireless communication device.

The storage unit 53 of the detection device 5 stores various types of information including various programs that control the operation of the detection device 5, a first detection model Md1 as a detection model, an identification model Md3, and a distortion correction parameter Pa1. The storage unit 53 of the detection device 5 includes, for example, RAM, ROM, and a hard disk drive (HDD).

The detection model is a trained machine learning model used to detect the vehicle 10 included in a captured image. In the present embodiment, the storage unit 53 of the detection device 5 stores, as detection models, a plurality of first detection models Md1 prepared for each one body type. In the present embodiment, the body type is a group of vehicle types when vehicles are classified into multiple types of vehicle 10 depending on the exterior shape of the vehicle 10. In this case, the vehicle 10 is classified into one body type depending on its vehicle class (also called "vehicle body" or "body size") determined by, for example, the overall length, the vehicle width, and the vehicle height of the vehicle 10, as well as the shape of the vehicle 10. In the present embodiment, the body types include, for example, "SUV," "sedan," "station wagon," "minivan," "one-box," "compact car," and "light vehicle." The body types are not limited to those listed above.

The first detection model Md1 is a machine learning model trained by inputting a first training data set. The first training data set is prepared for each one body type. The first training data set has a plurality of training images that include the vehicle 10, and region correct answer labels, which are associated with each of the plurality of regions that constitutes each training image. Each region correct answer label is a correct answer label indicating whether each region in the training image is a target region indicating the vehicle 10 or an out-of-target region indicating other than the vehicle 10. In the present embodiment, each region that constitutes a training image is a single pixel that constitutes the training image. Each region that constitutes the training image may be multiple pixels that constitute the training image. Each region that constitutes a training image is classified into either a target region or an out-of-target region, for example, according to the calculation result of comparison between RGB values of adjacent regions that constitute the training image. Each region that constitutes a training image may also be classified into either a target region or an out-of-target region according to the calculated probability obtained by calculation of probability of being a target region. When a region correct answer label is added to each region that constitutes a training image, it is associated with information indicating the position of the region to which the region correct answer label is added in the training image. If each region that constitutes the training image is a single pixel, the information indicating its position in the training image is, for example, pixel coordinates indicating the pixel position in the training image.

The first training data set includes M (M is an integer of 2 or more) first training images and N (N is an integer of 0 or more and less than M) second training images, as a plurality of training images. The first training image is an image containing a vehicle 10 that is classified into one body type. The second training image is an image containing a vehicle 10 that is classified into another body type different from the one body type. The number M of the first training images in the first training data set may be, for example, 1.5 times or more or 2 times or more of the number N of the second training images. When there are a plurality of other body types different from the one body type, the number M of the first training images in the first training data set is, for example, greater than the total number of the second training images that include vehicles 10 each classified into the plurality of other body types different from the one body type. In other words, the first detection model Md1 is a machine learning model that is trained with more first training images than the second training images, so that the first detection model Md1 preferentially learns the feature of the vehicle 10 classified into one body type. Fig. 2 illustrates the following three first detection models Md1a to Md1c as examples of the first detection model Md1. The first type of the first detection model Md1a is a first detection model Md1 that is trained with more vehicles 10 classified into "SUV" than the vehicles 10 classified into body types other than "SUV". The second type of the first detection model Md1b is a first detection model Md1 that is trained with more vehicles 10 classified into "sedan" than the vehicles 10 classified into body types other than "sedan". The third type of the first detection model Md1c is a first detection model Md1 that is trained with more vehicles 10 classified into "station wagon" than the vehicles 10 classified into body types other than "station wagon". The number and types of the first detection model Md1 are not limited to those described above.

In the present embodiment, when a captured image is input, the first detection model Md1 identifies a target region(s) from among the regions that constitute the input captured image. The first detection model Md1 then masks the target region to generate a first mask image in which a mask region is added to the target region.

The algorithm of the first detection model Md1 is, for example, a deep neural network (hereinafter referred to as "DNN") with the structure of a convolutional neural network (hereinafter referred to as "CNN") for implementing semantic segmentation or instance segmentation. The structure of the first detection model Md1 is not limited to those described above. The first detection model Md1 may be, for example, a trained machine learning model with an algorithm other than a neural network.

The identification model Md3 is a trained machine learning model used to identify one body type of the vehicle 10 included in the captured image and acquire type information indicating the identified one body type. Specifically, the identification model Md3 is a machine learning model that is trained to output the type information regarding the vehicle 10 included in the captured image when the captured image is input. In order to identify one body type of the vehicle 10, the identification model Md3 is trained to learn feature according to the body type. The feature according to the body type include, for example, the shape and the vehicle class of the vehicle 10. For example, CNN is used as the algorithm of the identification model Md3. The structure of the identification model Md3 is not limited to those described above. The identification model Md3 may be, for example, a trained machine learning model with an algorithm other than a neural network.

The distortion correction parameter Pa1 is a parameter used to correct the distortion of captured images. The details of the distortion correction parameter Pa1 are described later.

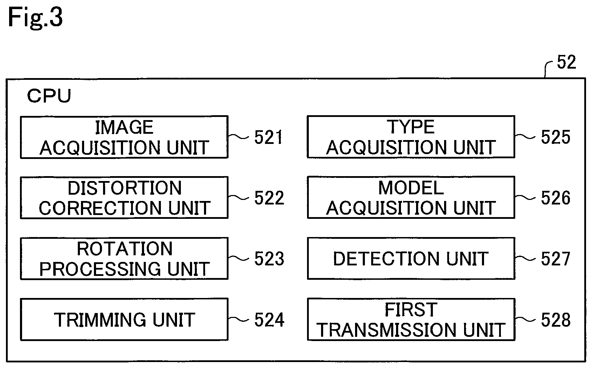

Fig. 3 is a diagram showing details of a CPU 52 mounted on the detection device 5 according to the first embodiment. The CPU 52 of the detection device 5 functions as an image acquisition unit 521, a distortion correction unit 522, a rotation processing unit 523, a trimming unit 524, and a type acquisition unit 525 by expanding various programs stored in the storage unit 53 of the detection device 5. Further, the CPU 52 of the detection device 5 functions as a model acquisition unit 526, a detection unit 527, and a first transmission unit 528 by expanding various programs stored in the storage unit 53 of the detection device 5.

The image acquisition unit 521 acquires an original image from the imaging device 9, which is an external device.

The distortion correction unit 522 corrects distortions of captured images. In the present embodiment, the distortion correction unit 522 generates a corrected image that is obtained by correcting distortions of the original image.

The rotation processing unit 523 rotates a captured image so that the vector indicating the movement direction of the vehicle 10 (hereinafter referred to as "a movement vector") faces a predetermined direction. In the present embodiment, the rotation processing unit 523 generates a rotated image by rotating a corrected image.

The trimming unit 524 deletes, from a captured image, other regions (hereinafter referred to as "unnecessary region") than the region constituted of the vehicle 10 and the surrounding area of the vehicle 10 (hereinafter referred to as "necessary region") in the respective regions that constitute the captured image. In this way, the trimming unit 524 cuts out the necessary region from the captured image. In the present embodiment, when the vehicle 10 has moved a distance exceeding a predetermined threshold, the trimming unit 524 deletes a post-movement region (unnecessary region) corresponding to the distance that the vehicle 10 has moved, from the rotated image. In this way, the trimming unit 524 generates a processed image that is obtained by cutting out a pre-movement region (necessary region) including the vehicle 10 from the rotated image.

The type acquisition unit 525 acquires type information indicating one body type of the vehicle 10 included in the captured image. In the present embodiment, the type acquisition unit 525 inputs the processed image to the identification model Md3 to acquire the type information indicating one body type of the vehicle 10 included in the captured image. The method of obtaining the type information is not limited to that described above.

The model acquisition unit 526 acquires the first detection model Md1 selected according to one body type identified by the type information acquired by the type acquisition unit 525. In the present embodiment, the model acquisition unit 526 selects and acquires a first detection model Md1 according to one body type identified by the type information acquired by the type acquisition unit 525, from among a plurality of first detection models Md1 prepared for the respective one body types stored in the storage unit 53 of the detection device 5. In other words, the model acquisition unit 526 acquires a first detection model Md1 that has been trained with more features of the vehicle 10 classified into one body type identified by the type information acquired by the type acquisition unit 525 than features of the vehicles 10 classified into body types other than the one body type. For example, if the body type of the vehicle 10 included in the captured image is identified as "SUV" according to the type information acquired by the type acquisition unit 525, the model acquisition unit 526 acquires a first detection model Md1a that has been trained with more vehicles 10 classified into "SUV" than the vehicles 10 classified into other body types.

The detection unit 527 detects the vehicle 10 included in the captured image by inputting the captured image to the first detection model Md1 acquired by the model acquisition unit 526 and identifying a target region(s) from among the regions that constitute the captured image. In the present embodiment, the detection unit 527 inputs the processed image to the first detection model Md1 acquired by the model acquisition unit 526. This identifies the target region from among the regions constituting the processed image, thereby generating the first mask image from the processed image.

The first transmission unit 528 transmits various types of information to other devices than the detection device 5. The first transmission unit 528 transmits, for example, the detection result by the detection unit 527 to the position calculation device 6. In the present embodiment, the detection result by the detection unit 527 is the first mask image. At least some of the functions of the detection device 5 may be implemented as a function of one of the vehicle control device 150, the position calculation device 6, the remote control device 7, and the imaging device 9.

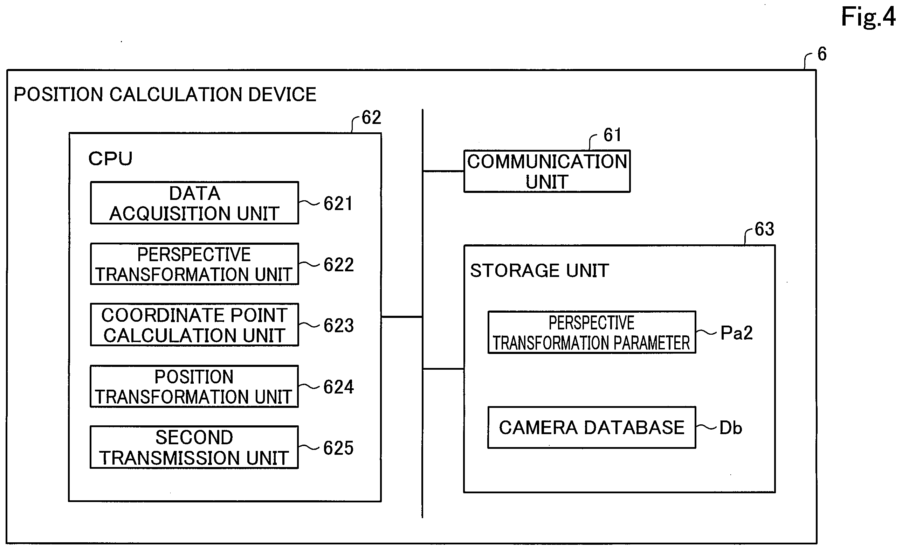

Fig. 4 is a diagram showing a schematic structure of the position calculation device 6. The position calculation device 6 calculates the position of the vehicle 10 included in the captured image using the detection result by the detection device 5. The position calculation device 6 uses the positioning point 10e of the vehicle 10 as the position of the vehicle 10. In the present embodiment, the position calculation device 6 calculates the position of the vehicle 10 included in the captured image using the first mask image. The position calculation device 6 has a communication unit 61, a storage unit 63, and a CPU 62. In the position calculation device 6, the communication unit 61, the storage unit 63, and the CPU 62 are connected to one another, for example, via an internal bus or interface circuit.

The communication unit 61 of the position calculation device 6 communicatively connects the vehicle control device 150, the detection device 5, the remote control device 7, and the imaging device 9 with the position calculation device 6. The communication unit 61 of the position calculation device 6 is, for example, a wireless communication device.

The storage unit 63 of the position calculation device 6 stores various types of information including various programs that control the operation of the position calculation device 6, a perspective transformation parameter Pa2, and a camera database Db. The storage unit 63 of the position calculation device 6 includes, for example, RAM, ROM, and a hard disk drive (HDD).

The perspective transformation parameter Pa2 is a parameter used for perspective transformation of the first mask image. The details of the perspective transformation parameter Pa2 are described later.

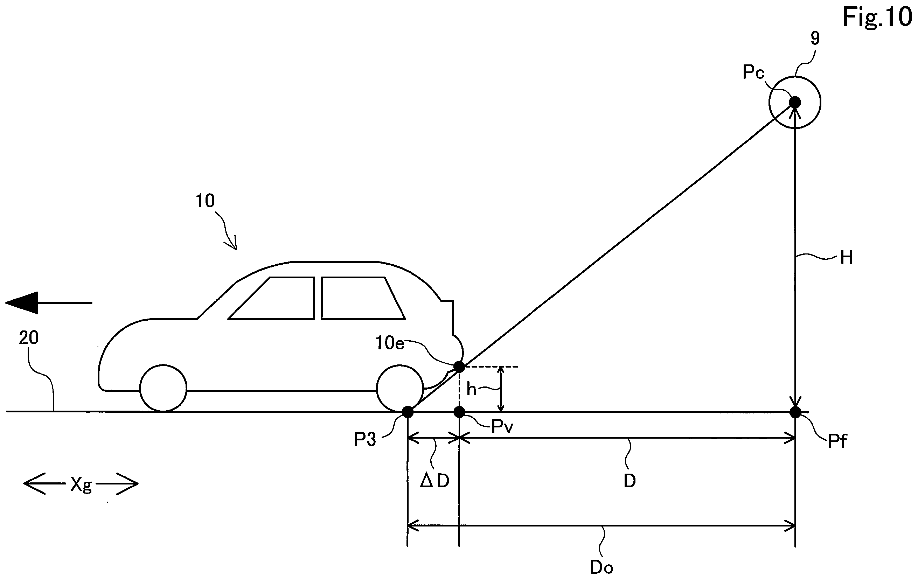

The camera database Db is a database indicating imaging parameters calculated based on the installation position of the imaging device 9 in the global coordinate system for each imaging device 9. Each imaging parameter is a parameter regarding the distance of the imaging device 9 from a predefined reference point. In the present embodiment, the imaging parameter is a height H of the imaging device 9 from a road surface 20 (Fig. 10, described later), which is the height H relative to the road surface 20 where the vehicle 10 is positioned. The camera database Db is, for example, a database in which the camera identification information is associated with the imaging parameter for the imaging device 9 identified by the camera identification information. The structure of the camera database Db is not limited to that described above. The camera identification information may be associated with the imaging range RG, the installation position, the installation angle, and the like, of the imaging device 9.

The CPU 62 of the position calculation device 6 functions as a data acquisition unit 621, a perspective transformation unit 622, a coordinate point calculation unit 623, a position transformation unit 624, and a second transmission unit 625 by expanding various programs stored in the storage unit 63 of the position calculation device 6.

The data acquisition unit 621 acquires various types of information. The data acquisition unit 621, for example, acquires the detection result by the detection device 5 from the detection device 5. In the present embodiment, the data acquisition unit 621 acquires the first mask image from the detection device 5. The data acquisition unit 621 acquires the imaging parameter for the imaging device 9 from which the original image to be analyzed has been acquired by referring to the camera database Db stored in the storage unit 63 of the position calculation device 6.

The perspective transformation unit 622 generates a second mask image obtained by performing perspective transformation on the first mask image. The coordinate point calculation unit 623 corrects a first coordinate point using a second coordinate point, thereby calculating the local coordinate point. The first coordinate point is a coordinate point in the local coordinate system of the specified vertex of a first bounding rectangle set in the mask region in the first mask image. The second coordinate point is a coordinate point in the local coordinate system of a vertex indicating the same position as the first coordinate point from among the vertices of a second bounding rectangle set in the mask region in the second mask image. The local coordinate point is a coordinate point indicating the position of the vehicle 10 in the local coordinate system. The position transformation unit 624 transforms the local coordinate point into a vehicle coordinate point using the imaging parameter acquired by the data acquisition unit 621 and the local coordinate point calculated by the coordinate point calculation unit 623. The vehicle coordinate point is a coordinate point indicating the position of the vehicle 10 in the global coordinate system.

The second transmission unit 625 transmits various types of information to other devices than the position calculation device 6. For example, the second transmission unit 625 transmits the vehicle coordinate point to the remote control device 7 as information indicating the position of the vehicle 10. At least some of the functions of the position calculation device 6 may be implemented as a function of one of the vehicle control device 150, the detection device 5, the remote control device 7, and the imaging device 9.

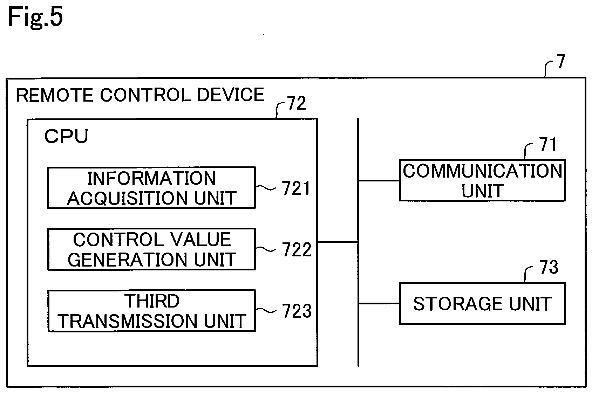

Fig. 5 shows a schematic structure of the remote control device 7. The remote control device 7 creates a control value that specifies the running operation of the vehicle 10 using the position information and the like of the vehicle 10, and transmits the control value to the vehicle 10. In this way, the remote control device 7 performs remote control of the operation of the vehicle 10. The remote control device 7 includes a communication unit 71, a storage unit 73, and a CPU 72. In the remote control device 7, the communication unit 71, the storage unit 73, and the CPU 72 are connected to one another, for example, via an internal bus and interface circuit. The communication unit 71 of the remote control device 7 communicatively connects the vehicle control device 150, the detection device 5, the position calculation device 6, and the imaging device 9 with the remote control device 7. The communication unit 71 of the remote control device 7 is, for example, a wireless communication device. The storage unit 73 of the remote control device 7 stores various programs that control the operation of the remote control device 7. The storage unit 53 of the remote control device 7 includes, for example, RAM, ROM, and a hard disk drive (HDD).

The CPU 72 of the remote control device 7 functions as an information acquisition unit 721, a control value generation unit 722, and a third transmission unit 723 by expanding the various programs stored in the storage unit 73 of the remote control device 7.

The information acquisition unit 721 acquires various types of information. The information acquisition unit 721 acquires, for example, information (hereinafter referred to as "running information") regarding running conditions of the vehicle 10. The running information includes, for example, the vehicle coordinate point transmitted from the position calculation device 6 as information indicating the position of the vehicle 10, running speed and actual steering angle of the vehicle 10 transmitted from the vehicle control device 150, and running route information stored in advance in the storage unit 73 of the remote control device 7. The running route information is information indicating the target running route of the vehicle 10 that runs in the remote automatic driving mode. The type of information included in the running information is not limited to those described above.

The control value generation unit 722 generates a control value that specifies the running operation of the vehicle 10 using the running information acquired by the information acquisition unit 721. Specifically, the control value generation unit 722 generates, for example, a reference control value and a modified control value. The reference control value is a control value for causing the vehicle 10 to run along the target running route. The modified control value is a control value for modifying the position of the vehicle 10 relative to the target running route. The reference control value and the modified control value include, for example, an acceleration control value that defines the acceleration of the vehicle 10 in the forward direction and a steering angle control value that defines the steering angle of the vehicle 10, respectively. The reference control value and the modified control value each may be a control value that includes either a trajectory control value or a destination control value, instead of the acceleration control value and the steering angle control value. The trajectory control value is a control value that defines the running trajectory of the vehicle 10 by arranging the target running positions of the vehicle 10 at predetermined times in chronological order. The destination control value is a control value indicating the target arrival time of the vehicle 10 at the target location.

The third transmission unit 723 transmits various types of information to other devices than the remote control device 7. The third transmission unit 723 transmits, for example, the control value generated by the control value generation unit 722 to the vehicle 10 subjected to the control. At least some of the functions of the remote control device 7 may be implemented as a function of one of the vehicle control device 150, the detection device 5, the position calculation device 6, and the imaging device 9.

A-2. Vehicle Detection Method and Position Calculation Method

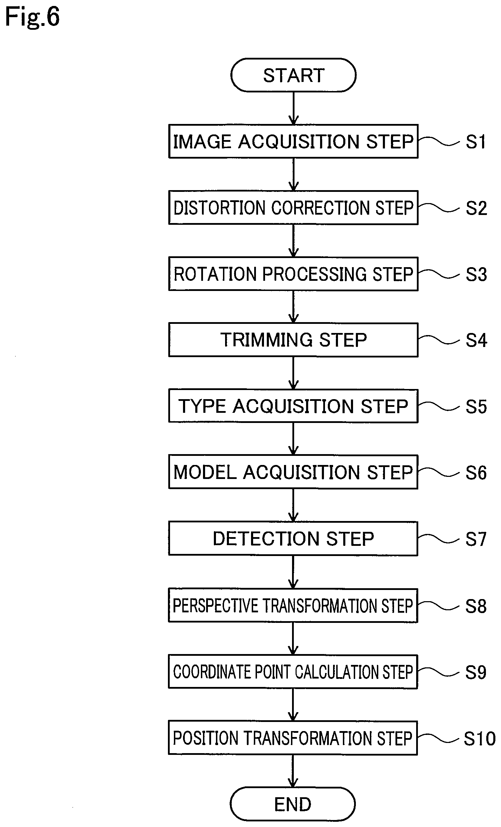

Fig. 6 is a flowchart showing a detection method of the vehicle 10 and a position calculation method according to the first embodiment. The method shown in Fig. 6 is repeated, for example, every predetermined time period at and after the time point when the vehicle 10 to be detected starts running in the remote automatic driving mode.

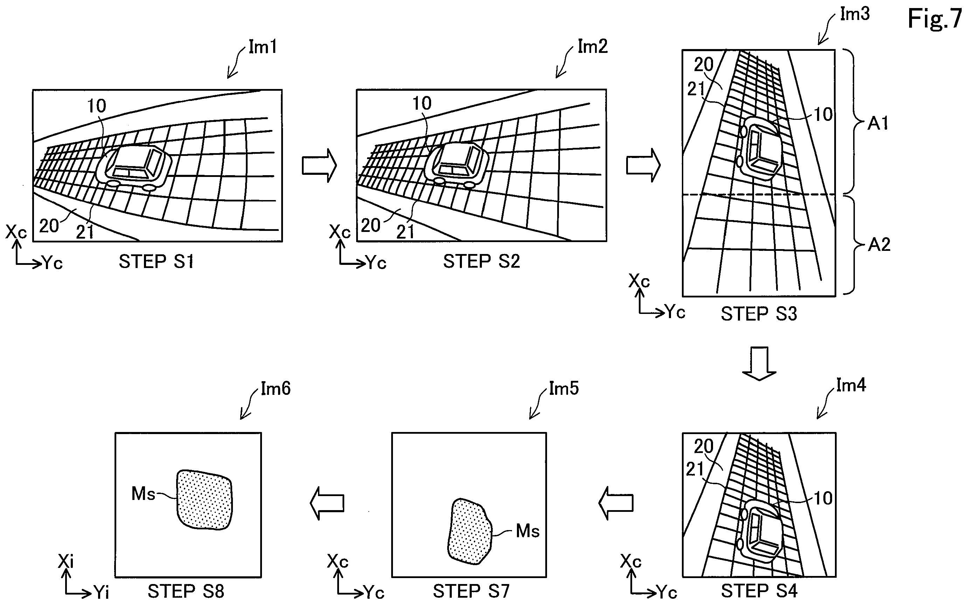

Fig. 7 is a schematic diagram illustrating examples of various images when the detection method and the position calculation method shown in Fig. 6 are performed. In Fig. 7, each step of Fig. 6 is labelled with a corresponding step number. The present embodiment describes an exemplary case in which the vehicle 10 runs (moves) along the traveling direction on the road surface 20 on which a mesh-like grid line 21 is drawn along each of the Xg axis parallel to the traveling direction of the vehicle 10 and the Yg axis, which is orthogonal to the Xg axis. Each of the Xg and Yg axes is a coordinate axis of the global coordinate system. In the alternative embodiments, the grid line 21 may be omitted.

As shown in Fig. 6, an image acquisition step (step S1) is performed first. As shown in Fig. 7, the image acquisition step is a step of acquiring an original image Im1 that includes the vehicle 10. In the present embodiment, in the image acquisition step, the image acquisition unit 521 acquires the original image Im1 from the imaging device 9.

As shown in Fig. 6, after the image acquisition step, a distortion correction step (step S2) is performed. The distortion correction step is a step of correcting the distortion of the captured image. In the present embodiment, as shown in Fig. 7, in the distortion correction step, the distortion correction unit 522 corrects the distortion of the original image Im1 to produce a corrected image Im2. Specifically, the distortion correction unit 522 corrects the distortion of the original image Im1, for example, using the distortion correction parameter Pa1 stored in advance in the storage unit 53 of the detection device 5. The distortion correction parameter Pa1 is, for example, a parameter related to the position information of the grid line 21 that can be obtained by calibration. The distortion correction method is not limited to that described above. The distortion correction parameter Pa1 may be any parameter other than that described above.

As shown in Fig. 6, after the distortion correction step, a rotation processing step (step S3) is performed. The rotation processing step is a step of rotating the captured image so that the direction of the movement vector for the vehicle 10 included in the captured image faces the predetermined direction. In the present embodiment, as shown in Fig. 7, in the rotation processing step, the rotation processing unit 523 rotates the corrected image Im2 such that the direction of the movement vector for the vehicle 10 included in the corrected image Im2 faces the predetermined direction. In this way, the rotation processing unit 523 generates a rotated image Im3. Specifically, the rotation processing unit 523 rotates the corrected image Im2 using the center of gravity of the vehicle 10 in the corrected image Im2 as the rotation center so that, for example, the direction of the movement vector for the vehicle 10 faces upward on the screen of the display device that displays the corrected image Im2. The movement of the feature point (e.g., the center of gravity) of the vehicle 10 can be expressed as a direction of the movement vector, for example, by the optical flow method. The amount and the direction of the movement vector of the vehicle 10 are estimated, for example, based on changes in position between the image frames of the feature points that are appropriately set on the corrected image Im2. The rotation processing method is not limited to that described above.

As shown in Fig. 6, a trimming step (step S4) is performed after the rotation processing step. The trimming step is a step of cutting out the necessary regions from captured images. In the present embodiment, as shown in Fig. 7, in the trimming step, when the vehicle 10 has moved a distance exceeding a predetermined threshold, the trimming unit 524 deletes a post-movement region A2 corresponding to the distance the vehicle 10 has moved as an unnecessary region from the rotated image Im3. In this way, the trimming unit 524 generates a processed image Im4 obtained by cutting out a pre-movement region A1 including the vehicle 10 from the rotated image Im3 as the necessary region. At this time, the trimming unit 524 estimates the post-movement region A2 by, for example, recognizing the distance the vehicle 10 has moved based on the estimated amount of the movement vector of the vehicle 10. In the detection method of the vehicle 10, any of the rotation processing step and the trimming step may be performed first. Further, the trimming method is not limited to that described above.

As shown in Fig. 6, a type acquisition step (step S5) is performed after the trimming step. The type acquisition step is a step of acquiring type information indicating one body type of the vehicle 10 included in the captured image. In the type acquisition step, the type acquisition unit 525 acquires type information indicating one body type of the vehicle 10 included in the captured image. It is sufficient that the type acquisition step is performed at an arbitrary time point after the image acquisition step is completed and before the detection step (step S7) is started.

After the type acquisition step, a model acquisition step (step S6) is performed. The model acquisition step is a step of acquiring the first detection model Md1 selected according to one body type identified by the type information acquired in the type acquisition step, from among a plurality of first detection models Md1 prepared for the respective one body types. In the present embodiment, in the model acquisition step, the model acquisition unit 526 selects and acquires the first detection model Md1 according to one body type identified by the type information acquired in the type acquisition step, from among a plurality of first detection models Md1 stored in advance in the storage unit 53 of the detection device 5. It is sufficient that the model acquisition step is performed at an arbitrary time point after the type acquisition step is completed and before the detection step is started.

After the model acquisition step, a detection step is performed. As shown in Fig. 7, the detection step is a step of detecting the outer shape of the vehicle 10 included in the captured image using a detection model, such as the first detection model Md1. In the present embodiment, in the detection step, the detection unit 527 inputs the processed image Im4 to the first detection model Md1 selected in the model acquisition step. In this way, the detection unit 527 detects the outer shape of the vehicle 10 included in the processed image Im4. The detection unit 527 then masks the target region in the processed image Im4 to generate a first mask image Im5 in which a mask region Ms is added to the target region. The first transmission unit 528 transmits the first mask image Im5 to the position calculation device 6. The detection method of the vehicle 10 is not limited to that described above.

As shown in Fig. 6, a perspective transformation step (step S8) is performed after the detection step. As shown in Fig. 7, the perspective transformation step is a step of performing perspective transformation of the first mask image Im5. In the perspective transformation step, the data acquisition unit 621 acquires the first mask image Im5 from the detection device 5. Then, the perspective transformation unit 622 generates a second mask image Im6 by perspective transformation of the first mask image Im5. Specifically, the perspective transformation unit 622 performs perspective transformation with respect to the first mask image Im5 to generate a bird's-eye view image that is viewed from a viewpoint above the vehicle 10 (e.g., directly above the vehicle 10) that is substantially perpendicular to the road surface 20, for example, using the perspective transformation parameter Pa2 that is stored in advance in the storage unit 63 of the position calculation device 6. The perspective transformation parameter Pa2 is, for example, a parameter related to the position information and internal parameter of the imaging device 9 obtained by calibration. As a result, the perspective transformation unit 622 generates a second mask image Im6 represented by the local coordinate system from the first mask image Im5 represented by the camera coordinate system. The local coordinate system is a coordinate system using one point in the image plane projected by perspective transformation as the origin and having the coordinate axes represented by the Xi axis and the Yi axis, which is orthogonal to the Xi axis. The perspective transformation method is not limited to that described above. The perspective transformation parameter Pa2 may be any parameter other than that described above.

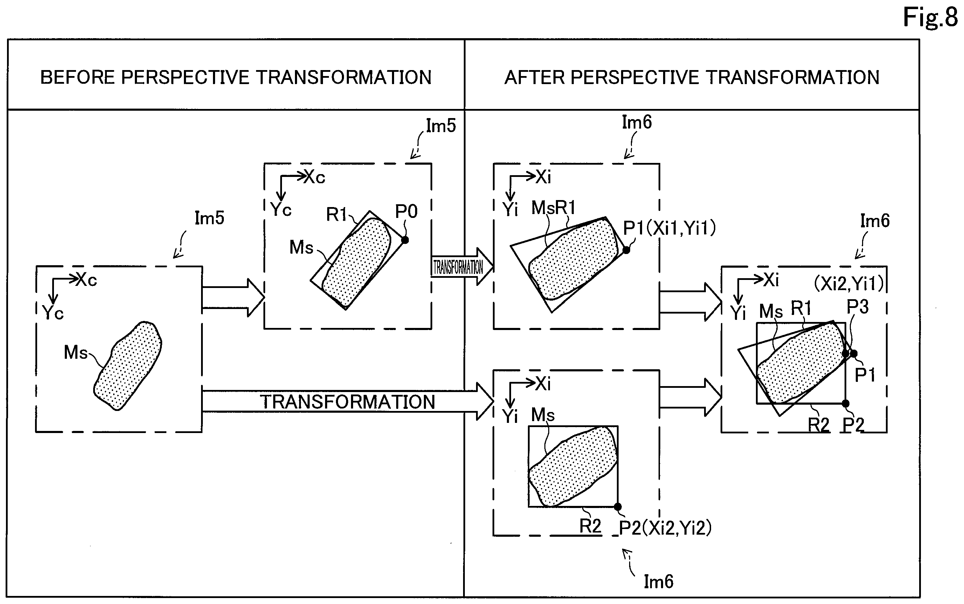

As shown in Fig. 6, a coordinate point calculation step (step S9) is performed after the perspective transformation step. Fig. 8 is a diagram for explaining details of the coordinate point calculation step. The coordinate point calculation step is a step of calculating a local coordinate point P3 indicating the position of the vehicle 10 in the local coordinate system.

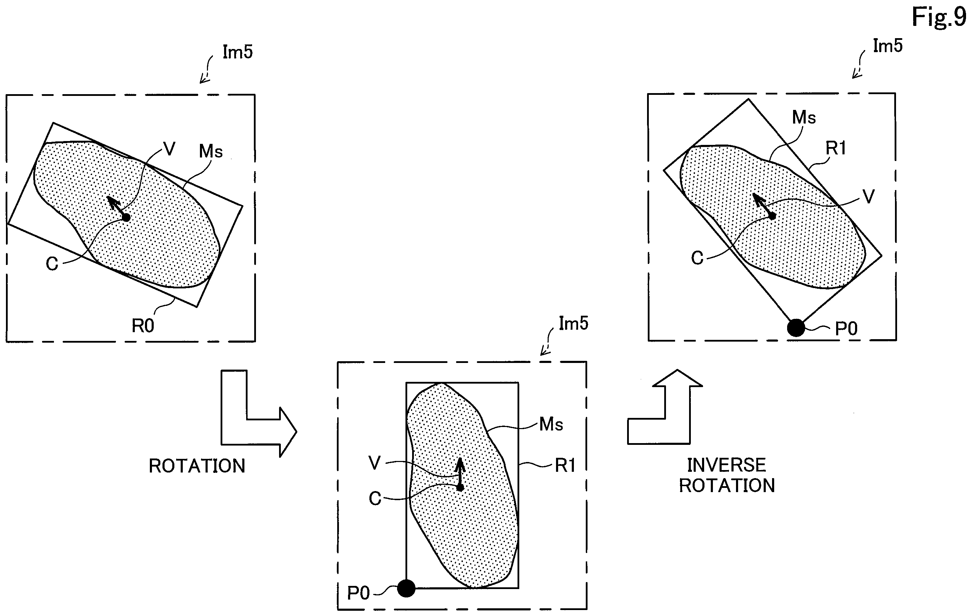

In the coordinate point calculation step, the coordinate point calculation unit 623 calculates a base coordinate point P0 from a first bounding rectangle R1 set in the mask region Ms in the first mask image Im5, which is the image before the perspective transformation. Fig. 9 is a diagram for explaining a method for calculating the base coordinate point P0. To calculate the base coordinate point P0, the coordinate point calculation unit 623 sets a base bounding rectangle R0 with respect to the mask region Ms in the first mask image Im5. Next, the coordinate point calculation unit 623 rotates the first mask image Im5 by the required amount of rotation with the center of gravity C of the mask region Ms as the rotation center so that the direction of the movement vector V of the vehicle 10 corresponding to the mask region Ms in the first mask image Im5 faces a predetermined direction. The predetermined direction is, for example, the upward direction on the screen of the display device that displays the first mask image Im5. Next, the coordinate point calculation unit 623 sets the first bounding rectangle R1 with respect to the mask region Ms of the rotated first mask image Im5 so that the long side thereof becomes parallel to the direction of the movement vector V. Next, the coordinate point calculation unit 623 inversely rotates the first mask image Im5 to which the first bounding rectangle R1 has been added, with the center of gravity C of the mask region Ms as the rotation center, by the above rotation amount. The coordinate point calculation unit 623 thus sets, as the base coordinate point P0, the coordinate point of the vertex that is one of the four vertices of the first bounding rectangle R1 and that has the coordinates with the closest distance to the positioning point 10e of the vehicle 10. Then, as shown in Fig. 8, the coordinate point calculation unit 623 performs perspective transformation with respect to the inversely rotated first mask image Im5, i.e., the first mask image Im5 after the calculation of the base coordinate point P0. In this way, the coordinate point calculation unit 623 sets the coordinate point corresponding to the base coordinate point P0 as a first coordinate point P1 in the first bounding rectangle R1 deformed by the perspective transformation.

Further, the coordinate point calculation unit 623 sets a second bounding rectangle R2 with respect to the mask region Ms in the second mask image Im6 obtained by perspective transformation of the first mask image Im5. Then, the coordinate point calculation unit 623 sets, as a second coordinate point P2, a vertex indicating the same position as the first coordinate point P1 from among the vertices of the second bounding rectangle R2. In other words, the first coordinate point P1 and the second coordinate point P2 are correlated with each other, as they are coordinate points indicating the same position.

Furthermore, the coordinate point calculation unit 623 performs a correction to replace the coordinates $(Xi1, Yi1)$ of the first coordinate point P1 with the coordinates $(Xi2, Yi2)$ of the second coordinate point P2 according to the relative magnitude between the coordinate values of the first coordinate point P1 and the second coordinate point P2. When the coordinate value $Xi1$ in the Xi direction of the first coordinate point P1 is greater than the coordinate value $Xi2$ in the Xi direction of the second coordinate point P2 $(Xi1 > Xi2)$, the coordinate point calculation unit 623 replaces the coordinate value Xi1 in the Xi direction of the first coordinate point P1 with the coordinate value Xi2 in the Xi direction of the second coordinate point P2. When the coordinate value Yi1 in the Yi direction of the first coordinate point P1 is greater than the coordinate value Yi2 in the Yi direction of the second coordinate point P2 (Yi1 > Yi2), the coordinate point calculation unit 623 replaces the coordinate value Yi1 in the Yi direction of the first coordinate point P1 with the coordinate value Yi2 in the Yi direction of the second coordinate point P2. In the example shown in Fig. 8, the coordinate value Xi1 in the Xi direction of the first coordinate point P1 is greater than the coordinate value Xi2 in the Xi direction of the second coordinate point P2. Further, the coordinate value Yi1 in the Yi direction of the first coordinate point P1 is smaller than the coordinate value Yi2 in the Yi direction of the second coordinate point P2. Accordingly, the local coordinate point P3 has the coordinates (Xi2, Yi1). In this way, the coordinate point calculation unit 623 calculates a local coordinate point P3 indicating the position of the vehicle 10 in the local coordinate system, by correcting the first coordinate point P1 using the second coordinate point P2. The method for calculating the local coordinate point P3 is not limited to that described above.

As shown in Fig. 6, a position transformation step (step S10) is performed after the coordinate point calculation step. The position transformation step is a step of calculating a vehicle coordinate point indicating the position of the vehicle 10 in the global coordinate system by transforming the local coordinate point P3 into the vehicle coordinate point. The vehicle coordinate point thus calculated corresponds to the "position" included in the vehicle position information, which is described later. In the position transformation step, the position transformation unit 624 transforms the local coordinate point P3 into the vehicle coordinate point using the vehicle parameter and the imaging parameter acquired by the data acquisition unit 621. The vehicle parameter is a parameter related to the distance of the positioning point 10e of the vehicle 10 from the reference point. In the present embodiment, the vehicle parameter is a height h (Fig. 10, described later) of the positioning point 10e of the vehicle 10 from the road surface 20. The vehicle parameter may be a variable according to the body type of the vehicle 10, or may be a predetermined constant.

The position transformation unit 624 transforms the local coordinate point P3 into the vehicle coordinate point using the relational expressions in the formulae (1) to (3) described later, which include the vehicle coordinate point as the objective variable and the local coordinate point P3, the imaging parameter, and the vehicle parameter as the explanatory variables. In this case, the position transformation unit 624 substitutes the coordinate value of the local coordinate point P3 calculated by the coordinate point calculation unit 623 into the relational expressions represented by the formulae (1) to (3). Further, the position transformation unit 624 substitutes the imaging parameter acquired by the data acquisition unit 621, i.e., the value of the imaging parameter corresponding to the imaging device 9 that acquired the original image Im1, into the relational expressions represented by the formulae (1) to (3).

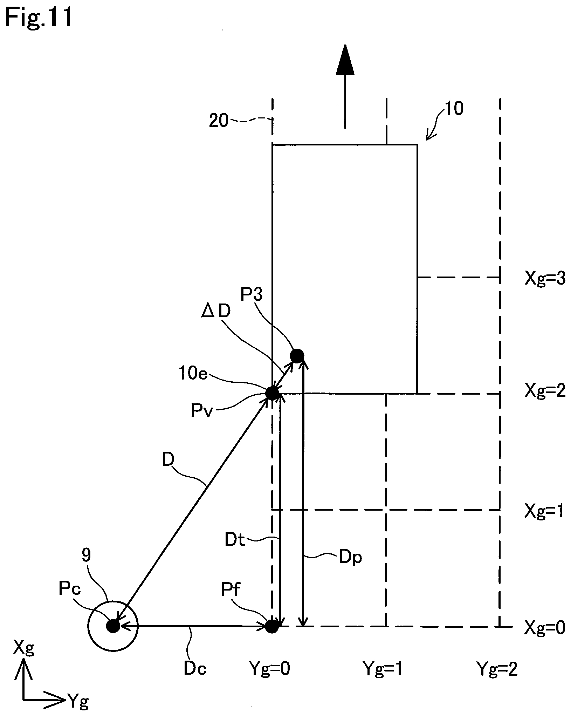

Fig. 10 is a first diagram for explaining details of the position transformation step. Fig. 10 shows the vehicle 10 as viewed from the left side surface. Fig. 11 is a second diagram for explaining details of the position transformation step. Fig. 11 shows the vehicle 10 as viewed from the roof side. The global coordinate system shown in Fig. 10 and Fig. 11 is a coordinate system using a fixed coordinate point Pf representing an arbitrary reference position on the road surface 20 as the origin and having the coordinate axes indicated by the Xg axis and the Yg axis, which is orthogonal to the Xg axis. An imaging coordinate point Pc is the position of the imaging device 9 that acquired the original image Im1 used to calculate the local coordinate point P3, and is also a coordinate point indicating the position of the imaging device 9 in the global coordinate system. The fixed coordinate point Pf and the imaging coordinate point Pc are stored in advance in the storage unit 63 of the position calculation device 6.

As shown in Fig. 10, Do represents the observation distance between the position of the imaging device 9 and the position of the vehicle 10 (local coordinate point P3) on the XgYg plane. $\Delta D$ represents the observation error. H represents the height [m] of the imaging device 9 from the road surface 20 as the imaging parameter. h represents the height [m] of the positioning point 10e of the vehicle 10 from the road surface 20 as the vehicle parameter. In this case, the observation error $\Delta D$ can be expressed by the following formula (1).

$$\Delta D = h/H \times Do \ ... \ \text{Formula (1)}$$

In other words, the larger the observation distance Do, the larger the observation error $\Delta D$.

Next, when D represents the actual distance (hereinafter referred to as a first distance) between the position of the imaging device 9 and the position of the positioning point 10e of the vehicle 10, the first distance D can be expressed by the following formula (2).

$$D = Do \times (1-h/H) \ ... \ \text{Formula (2)}$$

In other words, the first distance D is determined by the observation distance Do, the height H of the imaging device 9 as the imaging parameter, and the height h of the positioning point 10e of the vehicle 10 as the vehicle parameter.

Then, as shown in Fig. 11, when Dp represents the estimated distance between the reference position and the position of the vehicle 10, and Dt represents the actual distance (hereinafter referred to as a second distance) between the reference position and the vehicle 10, the second distance Dt can be expressed by the following formula (3).

$$Dt = Dp \times (1-h/H) \text{ ... Formula (3)}$$

Here, the estimated distance Dp can be calculated using the actual distance (hereinafter referred to as a third distance Dc) obtained from the fixed coordinate point Pf and the imaging coordinate point Pc, the local coordinate point P3, and the fixed coordinate point Pf. Therefore, the position transformation unit 624 can calculate a vehicle coordinate point Pv using the second distance Dt obtained by correcting the estimated distance Dp using the formula (3) shown above, and the fixed coordinate point Pf. The vehicle coordinate point Pv thus calculated is a coordinate point indicating the position of the vehicle 10 in the global coordinate system, and therefore corresponds to the position of the vehicle 10 in real space. The second transmission unit 625 transmits the vehicle coordinate point Pv to the remote control device 7.

A-3. Running Control of Vehicle by Remote Control

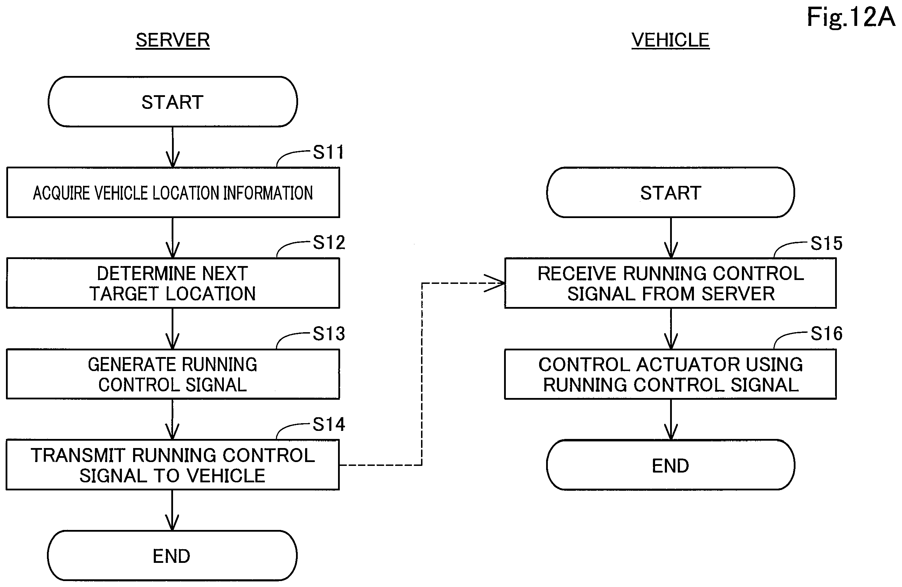

Fig. 12A is a flowchart of procedures in the process of running control of the vehicle 10 in the first embodiment. Fig. 12A shows an example in which the detection device 5, the position calculation device 6, and the remote control device 7 function together as a "server" that performs remote control of the vehicle 100. In the present embodiment, the step S11 is performed by the CPU 52 of the detection device 5 and the CPU 62 of the position calculation device 6. The steps S12 to S14 are performed by the CPU 72 of the remote control device 7.

In step S11, the server acquires vehicle location information using detection result output from an external sensor. The external sensor is located outside the vehicle 10. The vehicle location information is locational information as a basis for generating a running control signal. In the present embodiment, the vehicle location information includes the location and orientation of the vehicle 10 in a reference coordinate system of the factory. In the present embodiment, the reference coordinate system of the factory is a global coordinate system and a location in the factory can be expressed by X, Y, and Z coordinates in the global coordinate system. In the present embodiment, the external sensor is a camera that is disposed in the factory and outputs a captured image as detection result. In step S11, the server acquires the vehicle location information using the captured image acquired from the camera as the external sensor.

More specifically, in step S11, the server for example, determines the outer shape of the vehicle 10 from the captured image, calculates the coordinates of a positioning point of the vehicle 10 in a coordinate system of the captured image, namely, in a local coordinate system, and converts the calculated coordinates to coordinates in the global coordinate system, thereby acquiring the location of the vehicle 10. The outer shape of the vehicle 10 in the captured image may be detected by inputting the captured image to a detection model using artificial intelligence, for example.

Specifically, in the step S11 in the present embodiment, the detection method and the position calculation method shown in Fig. 6 are performed.

In step S12, the server determines a target location to which the vehicle 10 is to move next. In the present embodiment, the target location is expressed by X, Y, and Z coordinates in the global coordinate system. The memory of the server contains a reference route stored in advance as a route along which the vehicle 10 is to run. The route is expressed by a node indicating a departure place, a node indicating a way point, a node indicating a destination, and a link connecting nodes to each other. The server determines the target location to which the vehicle 10 is to move next using the vehicle location information and the reference route. The server determines the target location on the reference route ahead of a current location of the vehicle 10.

In step S13, the server generates a running control signal for causing the vehicle 10 to run toward the determined target location. In the present embodiment, the running control signal includes an acceleration and a steering angle of the vehicle 10 as parameters. The server calculates a running speed of the vehicle 10 from transition of the location of the vehicle 10 and makes comparison between the calculated running speed and a target speed of the vehicle 10 determined in advance. If the running speed is lower than the target speed, the server generally determines an acceleration in such a manner as to accelerate the vehicle 10. If the running speed is higher than the target speed as, the server generally determines an acceleration in such a manner as to decelerate the vehicle 10. If the vehicle 10 is on the reference route, server determines a steering angle and an acceleration in such a manner as to prevent the vehicle 10 from deviating from the reference route. If the vehicle 10 is not on the reference route, in other words, if the vehicle 10 deviates from the reference route, the server determines a steering angle and an acceleration in such a manner as to return the vehicle 10 to the reference route. In other embodiments, the running control signal may include the speed of the vehicle 10 as a parameter instead of or in addition to the acceleration of the vehicle 10.

In step S14, the server transmits the generated running control signal to the vehicle 10. The server repeats the acquisition of vehicle location information, the determination of a target location, the generation of a running control signal, the transmission of the running control signal, and others in a predetermined cycle.

In step S15, the vehicle 10 receives the running control signal transmitted from the server. In step S16, the vehicle 10 controls an actuator of the vehicle 10 using the received running control signal, thereby causing the vehicle 10 to run at the acceleration and the steering angle indicated by the running control signal. The vehicle 10 repeats the reception of a running control signal and the control over the actuator in a predetermined cycle. According to the system 50 in the present embodiment, it becomes possible to move the vehicle 10 without using a transport unit such as a crane or a conveyor.

A-4. Vehicle Operation Control Method

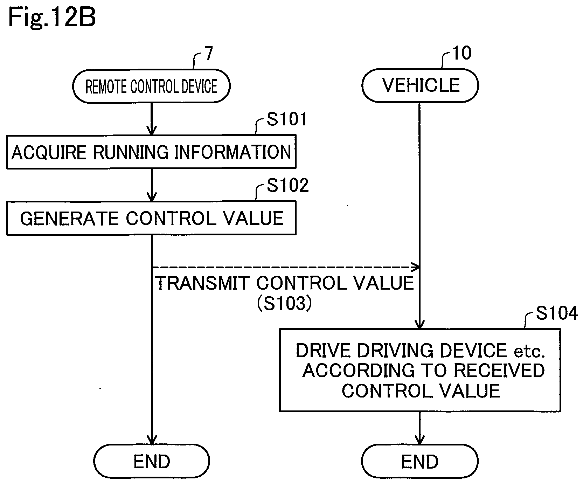

Fig. 12B is a flowchart of an operation control method of the vehicle 10 that runs in the remote automatic driving mode. The operation control method shown in Fig. 12B is repeated, for example, each time the vehicle coordinate point Pv is received from the position calculation device 6 as information indicating the position of the vehicle 10.

The information acquisition unit 721 of the remote control device 7 acquires running information including the vehicle coordinate point Pv (step S101). Then, the control value generation unit 722 generates a control value that specifies the running operation of the vehicle 10 using the running information (step S102). Then, the third transmission unit 723 transmits the control value to the vehicle 10 (step S103). The vehicle control device 150 mounted on the vehicle 10 drives the driving device 110 and the like according to the received control value (step S104). The steps S101 and S102 correspond to the process performed between the steps S11 and S13 in Fig. 12A. The step S103 corresponds to the process performed in the step S14. The step S104 corresponds to the process performed in the steps S15 and S16.

According to the first embodiment described above, when the vehicle 10 is made to run automatically by remote control, the position calculation system 1 is capable of calculating the position of the vehicle 10 using the captured image including the vehicle 10. Specifically, the detection device 5 inputs the captured image to a detection model that is a trained machine learning model capable of detecting the vehicle 10 included in the captured image. This allows the detection device 5 to detect the vehicle 10 included in the captured image. It then allows the position calculation device 6 to calculate the vehicle coordinate point Pv indicating the position of the vehicle 10 included in the captured image, using the first mask image Im5 that is the detection result by the detection device 5.

Here, since the exterior shape of the vehicle 10 varies depending on the body type, the feature extracted when the detection model is trained varies depending on the body type. Therefore, if a detection model trained with only a plurality of training images each containing vehicles 10 classified into different body types using the same number of images for each body type is applied to all body types of the vehicle 10, the accuracy in the detection of the vehicle 10 may decrease for some body types. When the detection accuracy of some body types of the vehicle 10 decreases, it is possible to retrain the detection model by adding training images that include the vehicles 10 of the body types whose detection accuracy has decreased so as to improve the detection accuracy of the vehicles 10 of the body types whose detection accuracy has decreased. However, by training the detection model with more training images containing some body types of the vehicle 10 than those containing other body types of the vehicle 10, it is possible that the feature in the additional training images is trained more intensively than other features. This can cause another difference in detection accuracy between body types. If the accuracy in the detection of the vehicle 10 in the captured image decreases, the accuracy in the calculation of the vehicle coordinate point Pv indicating the position of the vehicle 10 decreases. If the accuracy in the calculation of the vehicle coordinate point Pv decreases, the desired control value may not be generated.

Therefore, in the first embodiment described above, the first detection model Md1 is trained with more first training images containing vehicles 10 classified into one body type than the second training images containing vehicles 10 classified into other body types. As a result, the first detection model Md1 suitable for the detection of the vehicles 10 classified into one body type is prepared for each one body type. Further, according to the first embodiment described above, the detection device 5 is capable of acquiring the type information indicating one body type of the vehicle 10 included in the captured image, and acquiring the first detection model Md1 selected according to the one body type identified based on the acquired type information from a plurality of first detection models Md1 prepared for the respective one body types. The detection device 5 then inputs the captured image to the first detection model Md1 according to the body type of the vehicle 10 included in the captured image. This allows the detection device 5 to accurately detect the vehicle 10 included in the captured image. That is, by acquiring the first detection model Md1 suitable for the detection of the vehicle 10 classified into one body type, the respective regions that constitute the captured image can be accurately classified into target regions and out-of-target regions. This can suppress a decrease in accuracy in the detection of the vehicle 10 included in the captured image depending on the body type of the vehicle 10. As a result, it is possible to suppress the decrease in accuracy in the calculation of the vehicle coordinate point Pv. This reduces the difference between the position of the vehicle 10 calculated by the position calculation device 6 and the actual position of the vehicle 10. Thus, more appropriate control values can be generated.

Further, according to the first embodiment described above, the first training data set includes M (M is an integer of 2 or more) first training images and N (N is an integer of 0 or more and less than M) second training images. The first training data set may include only the first training images with no second training images. In this case, for example, by increasing the number M of the first training images containing vehicles 10 classified into one body type, the detection accuracy of the first detection model Md1 can be improved. Further, the first training data set may include the first training images and N second training images that are less than the first training images. In this case, since the first training data set includes the second training images, it is possible to improve the detection accuracy of, for example, the parts of the vehicle 10 that have a common exterior shape regardless of the body type.

Further, according to the first embodiment described above, when the vehicle 10 included in the captured image is detected, the distortion of the original image Im1 can be corrected to generate the corrected image Im2. In this way, the accuracy in the detection of the vehicle 10 included in the captured image can be further improved. This improves the accuracy in the calculation of the position of the vehicle 10.

Further, according to the first embodiment described above, when the vehicle 10 included in the captured image is detected, the corrected image Im2 can be rotated so that the direction of the movement vector V of the vehicle 10 faces a predetermined direction to generate the rotated image Im3. In this way, the vehicle 10 included in the captured image can be detected with the direction of the movement vector V unified. In this way, the accuracy in the detection of the vehicle 10 included in the captured image can be further improved.

Further, according to the first embodiment described above, when the vehicle 10 included in the captured image is detected, the trimming to cut out the necessary regions including the vehicle 10 from the rotated image Im3 can be performed to generate the processed image Im4 in which unnecessary regions are eliminated. In this way, the vehicle 10 can be detected while eliminating other elements than the vehicle 10 subjected to the detection from the captured image. In this way, the accuracy in the detection of the vehicle 10 included in the captured image can be further improved.

Further, according to the first embodiment described above, when the vehicle 10 included in the captured image is detected, the trimming step to cut out the pre-movement region A1 including the vehicle 10 from the rotated image Im3 can be performed to generate the processed image Im4. In this way, the occupied region of the vehicle 10 in the captured image can be made larger than that in the case where the trimming step is not performed. This makes it easier to detect vehicles 10 that are more distant from the imaging device 9. Therefore, it is possible to improve the accuracy in the detection of vehicles 10 that are more distant from the imaging device 9.

Further, according to the first embodiment described above, by inputting the processed image Im4 to the first detection model Md1, the target region can be masked from among the regions that constitute the processed image Im4, thereby generating the first mask image Im5 in which the mask region Ms is added to the target region. Here, according to the first embodiment described above, DNN with the CNN structure capable of semantic segmentation and instance segmentation can be used as the algorithm for the first detection model Md1. This suppresses a decrease in accuracy in the detection of the vehicle 10 due to the diversity of the out-of-target regions in the captured image.

Further, according to the first embodiment described above, it is possible to generate the second mask image Im6 obtained by perspective transformation of the first mask image Im5. This allows for the transformation of the camera coordinate system to the local coordinate system.

Further, according to the first embodiment described above, by setting the first bounding rectangle R1 on the mask region Ms before the perspective transformation of the first mask image Im5, it is possible to calculate the base coordinate point P0, which is the vertex with the closest coordinates to the positioning point 10e of the vehicle 10 in the first bounding rectangle R1. Then, by performing perspective transformation of the first mask image Im5 after the calculation of the base coordinate point P0, the first coordinate point P1, which is the coordinate point corresponding to the base coordinate point P0, can be calculated. Furthermore, by setting the second bounding rectangle R2 on the mask region Ms of the second mask image Im6, it is possible to calculate the second coordinate point P2, which is the vertex with the closest coordinates to the positioning point 10e of the vehicle 10 in the second bounding rectangle R2. Then, by correcting the first coordinate point P1 using the second coordinate point P2, the local coordinate point P3 can be calculated. By thus comparing and correcting the coordinate points before and after the perspective transformation, the local coordinate point P3 can be calculated more accurately. This further improves the accuracy in the calculation of the position of the vehicle 10.

Further, according to the first embodiment described above, by inputting the captured image to the identification model Md3, which is a trained machine learning model, type information indicating one body type of the vehicle 10 included in the captured image can be acquired. That is, the type information regarding the vehicle 10 included in captured image can be acquired by machine learning.

Further, according to the first embodiment described above, the imaging parameter regarding the imaging device 9 that acquired the original image Im1 can be acquired. Then, by substituting the calculated local coordinate point P3 and the acquired value of the imaging parameter into the relational expression that includes the vehicle coordinate point Pv as the objective variable and the local coordinate point P3, the imaging parameter, and the vehicle parameter as explanatory variables, the local coordinate point P3 can be transformed to the vehicle coordinate point Pv. This allows the local coordinate system to be transformed to the global coordinate system, thereby calculating the position of the positioning point 10e of the vehicle 10 in the global coordinate system as the vehicle coordinate point Pv.

Further, according to the first embodiment described above, the imaging parameter is the height H of the imaging device 9 from the road surface 20, which is calculated based on the position of the imaging device 9 in the global coordinate system. Further, the vehicle parameter is the height h of the positioning point 10e of the vehicle 10 from the road surface 20. In this way, the observation error ΔD can be calculated from the similarity between the imaging parameter and the vehicle parameter. Then, the local coordinate point P3 can be transformed into the vehicle coordinate point Pv using the calculated observation error ΔD.

Further, according to the first embodiment described above, the position of the vehicle 10 can be calculated without installing, in the vehicle 10, sensors, markers, transmitters/receivers, and the like, which are used for position calculation of the vehicle 10. Further, the position of the vehicle 10 can be calculated without mounting the position calculation device 6 on the vehicle 10. For this reason, the versatility of the position calculation system 1 can be increased.

B. Second Embodiment

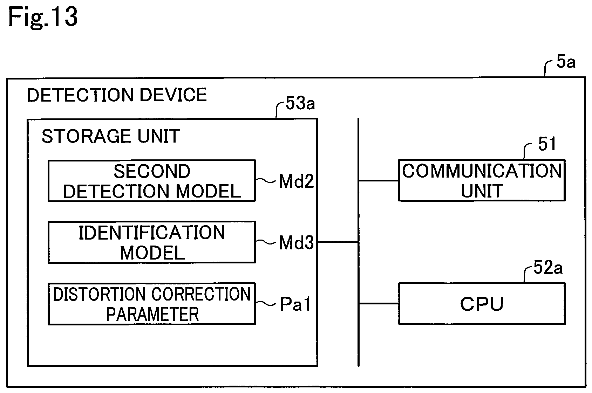

Fig. 13 is a diagram showing a schematic structure of a detection device 5a according to a second embodiment. In the present embodiment, the detection model used to detect the vehicle 10 included in the captured image differs from that in the first embodiment. This makes some of the structures of the detection device 5a and some of the processes of the detection method of the vehicle 10 differ from those in the first embodiment. Other structures are the same as those in the first embodiment. The same step and the same structure as those in the first embodiment are given the same symbols and the explanations thereof are omitted.

In the present embodiment, the storage unit 53a of the detection device 5a stores one second detection model Md2 as a detection model. Similarly to the first detection model Md1, the second detection model Md2 is a trained machine learning model used to detect the vehicle 10 included in the captured image. The second detection model Md2 is a machine learning model trained by inputting a second training data set. The second training data set has a plurality of training images each containing vehicles 10 classified into different body types, region correct answer labels respectively associated with the plurality of regions constituting the training images, and type correct answer labels respectively associated with the plurality of training images. As in the first embodiment, each region correct answer label is a correct answer label indicating whether each region in the training image is a target region indicating the vehicle 10 or an out-of-target region indicating other than the vehicle 10. The type correct answer label is a correct answer label indicating one body type of the vehicle 10 in the training image. In the present embodiment, the second detection model Md2 performs the following processes when a captured image is input together with one body type identified by the type information acquired by the type acquisition unit 525. In this case, the second detection model Md2 identifies a target region(s) in the input captured image. The second detection model Md2 then masks the target region to generate the first mask image Im5 in which the mask region Ms is added to the target region. For example, CNN is used as the algorithm of the second detection model Md2. The structure of the second detection model Md2 is not limited to those described above. The second detection model Md2 may be, for example, a trained machine learning model with an algorithm other than a neural network.

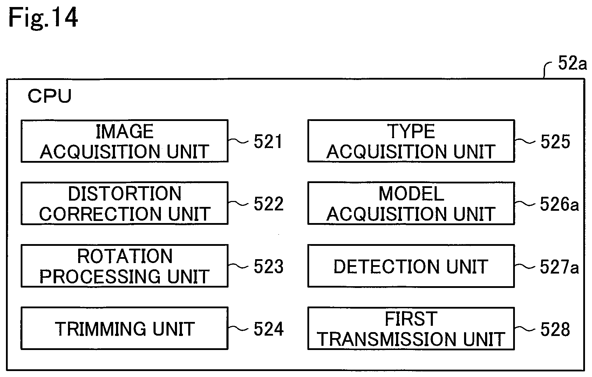

Fig. 14 is a diagram showing details of a CPU 52a mounted on the detection device 5a according to the second embodiment. The CPU 52a of the detection device 5a according to the present embodiment has a model acquisition unit 526a instead of the model acquisition unit 526 in the first embodiment. The model acquisition unit 526a acquires the second detection model Md2. The CPU 52a of the detection device 5a also has a detection unit 527a instead of the detection unit 527 in the first embodiment. The detection unit 527a detects the vehicle 10 included in the captured image by identifying the target regions from among the respective regions that constitute the input captured image. The detection unit 527a identifies the target regions by inputting, to the second detection model Md2, the captured image and one body type identified by the type information acquired by the type acquisition unit 525.

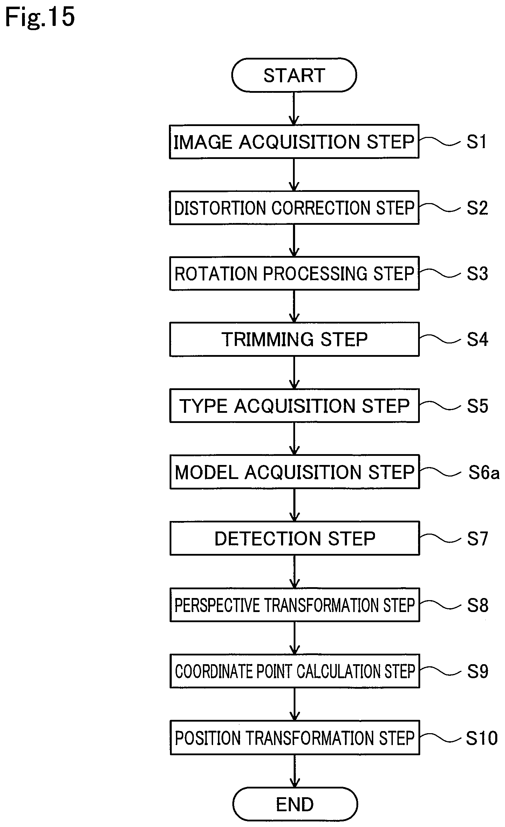

Fig. 15 is a flowchart showing the detection method of the vehicle 10 and the position calculation method according to the second embodiment. The method shown in Fig. 15 is repeated, for example, every predetermined time period at and after the time point when the vehicle 10 to be detected starts running in the remote automatic driving mode. The method shown in Fig. 15 is performed, for example, at the step S11 of Fig. 12A, as in the method shown in Fig. 6.

In the present embodiment, in the model acquisition step (step S6a), the model acquisition unit 526a acquires the second detection model Md2. Then, in the detection step (step S7a), the detection unit 527a inputs, to the second detection model Md2, the processed image Im4 and one body type identified by the type information acquired by the type acquisition unit 525. In this way, the detection unit 527a detects the outer shape of the vehicle 10 included in the processed image Im4. The detection unit 527a then masks the target region in the processed image Im4 to generate the first mask image Im5 in which the mask region Ms is added to the target region.

According to the second embodiment described above, the second detection model Md2 is prepared as a detection model that is trained by associating a plurality of training images that include the vehicles 10 and type correct answer labels that indicate the body types of the vehicles 10 in the respective training images. This allows for accurate detection of the vehicle 10 included in the input captured image by inputting the captured image associated with the body type to the second detection model Md2. That is, the respective regions that constitute the captured image input to the second detection model Md2 can be accurately classified into target regions and out-of-target regions. This can suppress a decrease in accuracy in the detection of the vehicle 10 included in the captured image depending on the body type of the vehicle 10. As a result, it is possible to suppress the decrease in accuracy in the calculation of the vehicle coordinate point Pv. This reduces the difference between the position of the vehicle 10 calculated by the position calculation device 6 and the actual position of the vehicle 10. Thus, more appropriate control values can be generated.

C. Third Embodiment

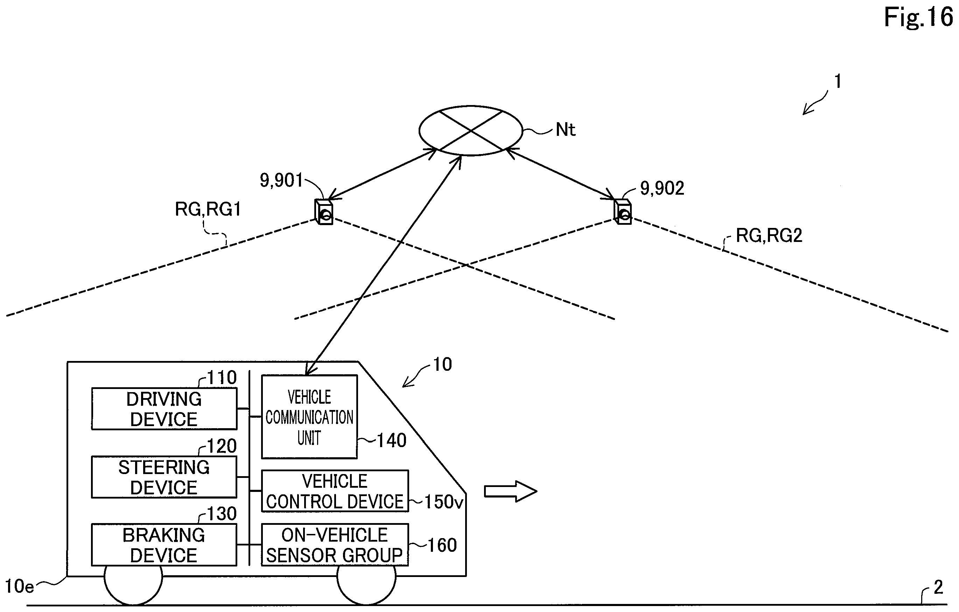

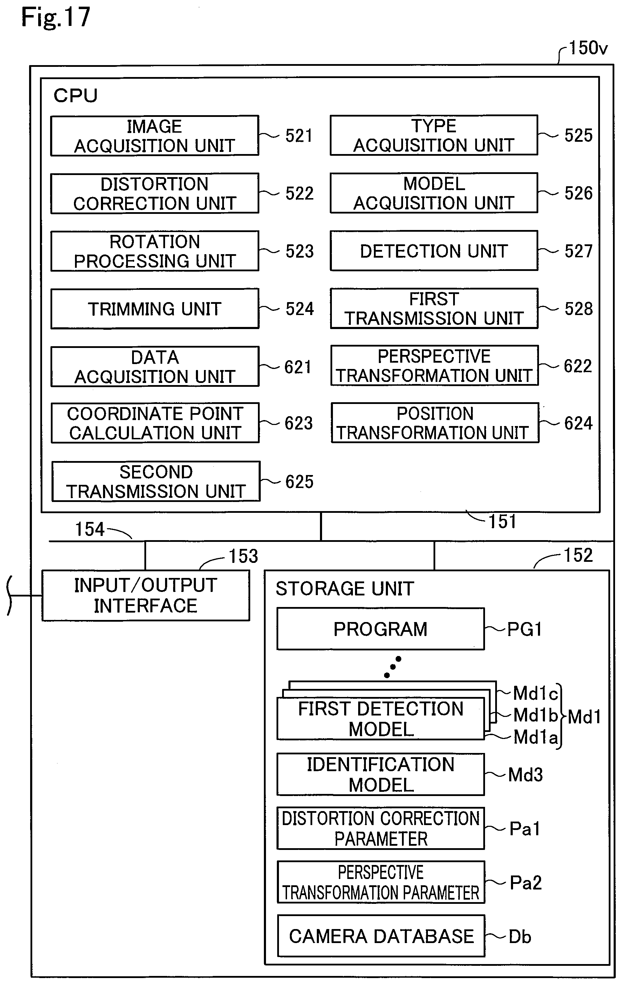

Fig. 16 is a diagram showing a schematic structure of a position calculation system 1 according to a third embodiment. Fig. 17 is a diagram showing a schematic structure of a vehicle control device 150v according to the third embodiment. Unlike the first embodiment, the detection device 5 and the position calculation device 6 as separate devices from the vehicle control device 150v are not provided in the present embodiment, and the vehicle control device 150v functions as a detection device and a position calculation device. In other words, the vehicle control device 150v in the third embodiment corresponds to the "detection device" in the present disclosure. Since the device structure of the vehicle in the present embodiment is the same as that in the first embodiment, the vehicle in the present embodiment is denoted as a vehicle 10 for convenience.

As shown in Fig. 17, the vehicle control device 150v includes a CPU 151, a storage unit 152, an input/output interface 153, and an internal bus 154. The CPU 151, the storage unit 152, and the input/output interface 153 are connected via the internal bus 154 to enable bidirectional communication. The input/output interface 153 is connected to the driving device 110, the steering device 120, the braking device 130, the vehicle communication unit 140, and the on-vehicle sensor group 160, all of which are shown in Fig. 16. The storage unit 152 includes, for example, RAM, ROM, and HDD. The storage unit 152 stores various type of information, including the program PG1, the first detection model Md1, the identification model Md3, the distortion correction parameter Pa1, the perspective transformation parameter Pa2, and the camera database Db. By expanding the program PG1, the CPU 151 functions as the image acquisition unit 521, the distortion correction unit 522, the rotation processing unit 523, the trimming unit 524, the type acquisition unit 525, the model acquisition unit 526, the detection unit 527, the first transmission unit 528, the data acquisition unit 621, the perspective transformation unit 622, the coordinate point calculation unit 623, the position transformation unit 624, and the second transmission unit 625. Further, by expanding the program PG1, the CPU 151 also implements the function of causing the vehicle 100 to run by autonomous control.

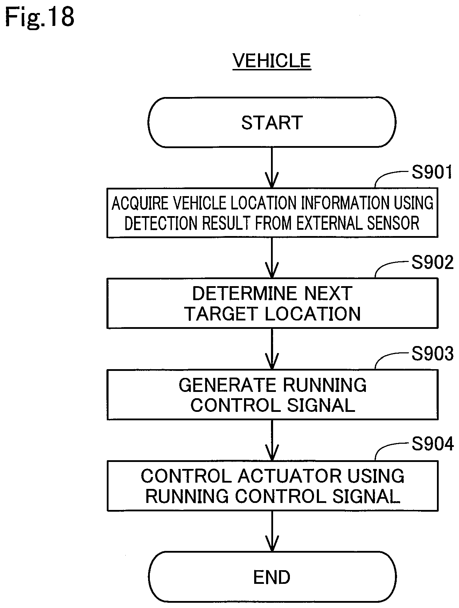

FIG. 18 is a flowchart showing a processing procedure for running control of the vehicle 10 in the third embodiment. Since the configuration of the vehicle in the present embodiment is the same as in the first embodiment, the vehicle in the present embodiment is denoted as vehicle 10 for convenience. In step S901, the vehicle 10 acquires vehicle location information using detection result output from the camera as an external sensor. In step S902, the vehicle 10 determines a target location to which the vehicle 10 is to move next. In step S903, the vehicle 10 generates a running control signal for causing the vehicle 10 to run to the determined target location. In step S904, the vehicle 10 controls an actuator using the generated running control signal, thereby causing the vehicle 10 to run by following a parameter indicated by the running control signal. The vehicle 10 repeats the acquisition of vehicle location information, the determination of a target location, the generation of a running control signal, and the control over the actuator in a predetermined cycle. According to the running control in the present embodiment, it is possible to cause the vehicle 10 to run by autonomous control without controlling the vehicle 10 remotely using the server.

The third embodiment described above is also capable of suppressing the decrease in accuracy in the detection of the vehicle 10 included in the captured image depending on the body type of the vehicle 10. This allows the vehicle 10 to generate more appropriate control values for causing the vehicle 10 to run by autonomous control. In the step S901 in the present embodiment, the method shown in Fig. 6 is performed in the substantially same manner as in the first embodiment. In alternative embodiments, in the step S901, the method shown in Fig. 15 may be performed in the substantially same manner as in the second embodiment. In this case, the storage unit 152 may store the second detection model Md2. The CPU 151 may also function as the model acquisition unit 526a and the detection unit 527a by expanding the program PG1. Further, in alternative embodiments, for example, the vehicle 10 may function as one of the detection device and the position calculation device, and the other may be provided separately from the vehicle 10.

D. Alternative Embodiments

D-1. Alternative Embodiment 1

The one body type may indicate a single type of the vehicle 10. The type of the vehicle 10 refers to, for example, the type of the vehicle 10 classified by the name given to the vehicles 10 with the same or common exterior shape. In this case, the storage unit 53 of the detection device 5 stores at least one of a plurality of first detection models Md1 prepared for each one type of the vehicle 10 and a single second detection model Md2 that has been trained by associating one type of the vehicle 10 with a training image. The first training image here is an image that includes the vehicle 10 classified into one type. The second training image is an image that includes the vehicle 10 classified into another vehicle type different from the one type. The type acquisition unit 525 of the detection device 5, 5a acquires type information indicating the type of the vehicle 10 included in the captured image. The model acquisition unit 526 acquires the first detection model Md1 selected according to one type identified by the type information acquired by the type acquisition unit 525, from among the plurality of first detection models Md1 prepared for the respective one types. According to such an embodiment, it is possible to more accurately grasp the differences in exterior shape of the vehicle 10 that vary depending on the type of the vehicle 10. This can improve the accuracy in the detection of the vehicle 10 included in the captured image.

D-2. Alternative Embodiment 2

The type acquisition unit 525 may acquire type information indicating one body type of the vehicle 10 included in the captured image using schedule information stored in advance in the storage unit 53 of the detection device 5. The schedule information is information indicating the scheduled time when the vehicle 10 classified into one body type runs in the imaging range RG, and is associated with each imaging range RG of the plurality of imaging devices 9 that acquire the original image Im1. In such an embodiment, it is possible to acquire the type information indicating one body type of the vehicle 10 included in the captured image using the schedule information. This allows the user to acquire the type information regarding the vehicle 10 included in the captured image without performing image analysis. Therefore, the processing load on the type acquisition unit 525 in the type acquisition step can be reduced.

D-3. Alternative Embodiment 3

The training images included in the first and second training data sets may be unprocessed images, such as the original image Im1, which were not processed through the distortion correction process, the rotation process, the trimming, and the like. In such an embodiment, image processing is not required in the preparation of the first and second training data sets. This reduces the processing load during the learning of the first detection model Md1 and the second detection model Md2.

D-4. Alternative Embodiment 4

The training image may be either the corrected image Im2, the rotated image Im3, or the processed image Im4. Such an embodiment makes it possible to improve the accuracy in the detection of the vehicle 10 when the captured image obtained by processing the original image Im1 is input to one of the first detection model Md1 and the second detection model Md2, as in the first embodiment and the second embodiment described above.

D-5. Alternative Embodiment 5

In the vehicle 10 detection methods shown in Fig. 6 and Fig. 15, the distortion correction step is not indispensable. For example, if the steps after the rotation processing step are performed without performing the distortion correction step, the rotation processing unit 523 rotates the original image Im1 instead of the corrected image Im2 in the rotation processing step. Such an embodiment also enables calculation of the local coordinate point P3.

D-6. Alternative Embodiment 6

In the vehicle 10 detection methods shown in Fig. 6 and Fig. 15, the rotation processing step is not indispensable. For example, if the distortion correction step and the rotation processing step are not performed, the trimming unit 524 performs trimming on the original image Im1 instead of the rotated image Im3 in the trimming step. Such an embodiment also enables calculation of the local coordinate point P3.

D-7. Alternative Embodiment 7

In the vehicle 10 detection methods shown in Fig. 6 and Fig. 15, the trimming step is not indispensable. For example, if the distortion correction step, the rotation processing step, and the trimming step are not performed, in the detection step, the detection unit 527, 527a generates the first mask image Im5 in which the mask region Ms is added to the original image Im1, instead of the processed image Im4. Such an embodiment also enables calculation of the local coordinate point P3.

D-8. Alternative Embodiment 8

The captured image may include a plurality of vehicles 10. In this case, the CPU 52, 52a of the detection device 5, 5a may include a deletion unit that deletes, for example, the mask region Ms of the vehicle 10 that is not subjected to the position calculation, from the first mask image Im5. The deletion unit, for example, finds a mask region Ms that exists outside the target recognition region as the mask region Ms of the vehicle 10 not subjected to the position calculation, from among the mask regions Ms generated in the detection step, and deletes it from the first mask image Im5. The target recognition region is, for example, a predetermined region where the vehicle 10 moves in the first mask image Im5. The predetermined region where the vehicle 10 moves is, for example, the region corresponding to the region of the grid line 21. The target recognition region is stored in advance in the storage unit 53, 53a of the detection device 5, 5a. In such an embodiment, it is possible to eliminate the influence of the vehicle 10 that is not subjected to the position calculation when a plurality of vehicles 10 are captured in the captured image. This improves the accuracy in the calculation of the position of the vehicle 10.

### D-9. Alternative Embodiment 9

The captured image may include a plurality of vehicles 10. In this case, a DNN that performs instance segmentation may be used as an algorithm for the first detection model Md1 and the second detection model Md2. In such an embodiment, the plurality of vehicles 10 included in the captured image can be classified, and the first mask image Im5 with masking for each vehicle 10 can be generated. This allows for selection of the vehicle 10 subjected to the position calculation when a plurality of vehicles 10 are included in the captured image, thereby allowing position calculation of the selected vehicle 10.

### D-10. Alternative Embodiment 10

The position calculation device 6 may calculate the position of a stationary vehicle 10. When the position of a stationary vehicle 10 is calculated, the position calculation device 6 calculates the position of the vehicle 10 using, for example, instead of the direction of the movement vector V of the running vehicle 10, the initial vector direction of the vehicle 10 estimated from the captured image that is acquired first after the booting of the position calculation device 6. In such an embodiment, the position of the vehicle 10 can be calculated using the captured image even when the vehicle 10 is stopped.

### D-11. Alternative Embodiment 11

At least some of the detection device 5, 5a, the position calculation device 6, and the remote control device 7 may be integrated into one unit. Furthermore, in an alternative embodiment, each unit of the detection device 5, the position calculation device 6, and the remote control device 7 may be implemented by, for example, cloud computing constituted of one or more computers. In such an embodiment, the structures of the detection device 5, 5a, the position calculation device 6, and the remote control device 7 can be changed as needed.

### D-12. Alternative Embodiment 12

The image acquisition unit 521 of the detection device 5, 5a may acquire the original image Im1 via another external device (e.g., the remote control device 7) other than the imaging device 9, without directly acquiring the original image Im1 from the imaging device 9. Such an embodiment also allows the image acquisition unit 521 of the detection device 5, 5a to acquire the original image Im1 acquired by the imaging device 9.

### D-13. Alternative Embodiment 13

In each of the above-described embodiments, the vehicle 10 is simply required to have a configuration to become movable by unmanned driving. The vehicle 10 may embodied as a platform having the following configuration, for example. The vehicle 10 is simply required to include at least actuators and a controller. More specifically, in order to fulfill three functions including "run," "turn," and "stop" by unmanned driving, the actuators may include a driving device, a steering device and a braking device. The actuators are controlled by the controller that controls running of the vehicle 10. In order for the vehicle 10 to acquire information from outside for unmanned driving, the vehicle 10 is simply required to include the communication device further. Specifically, the vehicle 10 to become movable by unmanned driving is not required to be equipped with at least some of interior components such as a driver's seat and a dashboard, is not required to be equipped with at least some of exterior components such as a bumper and a fender or is not required to be equipped with a bodyshell. In such cases, a remaining component such as a bodyshell may be mounted on the vehicle 10 before the vehicle 10 is shipped from a factory, or a remaining component such as a bodyshell may be mounted on the vehicle 10 after the vehicle 10 is shipped from a factory while the remaining component such as a bodyshell is not mounted on the vehicle 10. Each of components may be mounted on the vehicle 10 from any direction such as from above, from below, from the front, from the back, from the right, or from the left. Alternatively, these components may be mounted from the same direction or from respective different directions. The location determination for the platform may be performed in the same way as for the vehicle 10 in the first embodiments.

### D-14. Alternative Embodiment 14

The detection device 5, 5a may detect the vehicle 10 using the first detection model Md1 that is stored in a device other than the detection device 5, 5a and selected by a device other than the detection device 5, 5a. Such an embodiment also enables acquisition of the first detection model Md1 according to the body type of the vehicle 10.

### D-15. Alternative Embodiment 15

In the above-described first embodiment, the server performs the processing from acquisition of vehicle location information to generation of a running control signal. By contrast, the vehicle 10 may perform at least part of the processing from acquisition of vehicle location information to generation of a running control signal. For example, embodiments (1) to (3) described below are applicable, for example.

(1) The server may acquire vehicle location information, determine a target location to which the vehicle 10 is to move next, and generate a route from a current location of the vehicle 10 indicated by the acquired vehicle location information to the target location. The server may generate a route to the target location between the current location and a destination or generate a route to the destination. The server may transmit the generated route to the vehicle 10. The vehicle 10 may generate a running control signal in such a manner as to cause the vehicle 10 to run along the route received from the server and control an actuator using the generated running control signal.

(2) The server may acquire vehicle location information and transmit the acquired vehicle location information to the vehicle 10. The vehicle 10 may determine a target location to which the vehicle 10 is to move next, generate a route from a current location of the vehicle 10 indicated by the received vehicle location information to the target location, generate a running control signal in such a manner as to cause the vehicle 10 to run along the generated route, and control an actuator using the generated running control signal.

(3) In the foregoing embodiments (1) and (2), an internal sensor may be mounted on the vehicle 10, and detection result output from the internal sensor may be used in at least one of the generation of the route and the generation of the running control signal. The internal sensor is a sensor mounted on the vehicle 10. More specifically, the internal sensor might include a camera, LiDAR, a millimeter wave radar, an ultrasonic wave sensor, a GPS sensor, an acceleration sensor, and a gyroscopic sensor, for example. For example, in the foregoing embodiment (1), the server may acquire detection result from the internal sensor, and in generating the route, may reflect the detection result from the internal sensor in the route. In the foregoing embodiment (1), the vehicle 10 may acquire detection result from the internal sensor, and in generating the running control signal, may reflect the detection result from the internal sensor in the running control signal. In the foregoing embodiment (2), the vehicle 10 may acquire detection result from the internal sensor, and in generating the route, may reflect the detection result from the internal sensor in the route. In the foregoing embodiment (2), the vehicle 10 may acquire detection result from the internal sensor, and in generating the running control signal, may reflect the detection result from the internal sensor in the running control signal.

D-16. Alternative Embodiment 16

In the above-described embodiment in which the vehicle 10 can be running by autonomous control, the vehicle 10 may be equipped with an internal sensor, and detection result output from the internal sensor may be used in at least one of generation of a route and generation of a running control signal. For example, the vehicle 10 may acquire detection result from the internal sensor, and in generating the route, may reflect the detection result from the internal sensor in the route. The vehicle 10 may acquire detection result from the internal sensor, and in generating the running control signal, may reflect the detection result from the internal sensor in the running control signal.

D-17. Alternative Embodiment 17

In the above-described embodiment in which the vehicle 10 can be running by autonomous control, the vehicle 10 acquires vehicle location information using detection result from the external sensor. By contrast, the vehicle 10 may be equipped with an internal sensor, the vehicle 10 may acquire vehicle location information using detection result from the internal sensor, determine a target location to which the vehicle 10 is to move next, generate a route from a current location of the vehicle 10 indicated by the acquired vehicle location information to the target location, generate a running control signal for running along the generated route, and control an actuator of the vehicle 10 using the generated running control signal. In this case, the vehicle 10 is capable of running without using any detection result from an external sensor. The vehicle 10 may acquire target arrival time or traffic congestion information from outside the vehicle 10 and reflect the target arrival time or traffic congestion information in at least one of the route and the running control signal.

D-18. Alternative Embodiment 18

In the above-described first embodiment, the server automatically generates a running control signal to be transmitted to the vehicle 10. By contrast, the server may generate a running control signal to be transmitted to the vehicle 10 in response to operation by an external operator existing outside the vehicle 10. For example, the external operator may operate an operating device including a display on which a captured image output from the external sensor is displayed, steering, an accelerator pedal, and a brake pedal for operating the vehicle 10 remotely, and a communication device for making communication with the server through wire communication or wireless communication, for example, and the server may generate a running control signal responsive to the operation on the operating device.

D-19. Alternative Embodiment 19

In each of the above-described embodiments, the vehicle 10 is simply required to have a configuration to become movable by unmanned driving. The vehicle 10 may embodied as a platform having the following configuration, for example. The vehicle 10 is simply required to include at least actuators and a controller. More specifically, in order to fulfill three functions including "run," "turn," and "stop" by unmanned driving, the actuators may include a driving device, a steering device and a braking device. The actuators are controlled by the controller that controls running of the vehicle 10. In order for the vehicle 10 to acquire information from outside for unmanned driving, the vehicle 10 is simply required to include the communication device further. Specifically, the vehicle 10 to become movable by unmanned driving is not required to be equipped with at least some of interior components such as a driver's seat and a dashboard, is not required to be equipped with at least some of exterior components such as a bumper and a fender or is not required to be equipped with a bodyshell. In such cases, a remaining component such as a bodyshell may be mounted on the vehicle 10 before the vehicle 10 is shipped from a factory, or a remaining component such as a bodyshell may be mounted on the vehicle 10 after the vehicle 10 is shipped from a factory while the remaining component such as a bodyshell is not mounted on the vehicle 10. Each of components may be mounted on the vehicle 10 from any direction such as from above, from below, from the front, from the back, from the right, or from the left. Alternatively, these components may be mounted from the same direction or from respective different directions. The location determination for the platform may be performed in the same way as for the vehicle 10 in the first embodiments.

D-20. Alternative Embodiment 20

The vehicle 10 may be manufactured by combining a plurality of modules. The module means a unit composed of one or more components grouped according to a configuration or function of the vehicle 10. For example, a platform of the vehicle 10 may be manufactured by combining a front module, a center module and a rear module. The front module constitutes a front part of the platform, the center module constitutes a center part of the platform, and the rear module constitutes a rear part of the platform. The number of the modules constituting the platform is not limited to three but may be equal to or less than two, or equal to or greater than four. In addition to or instead of the platform, any parts of the vehicle 10 different from the platform may be modularized. Various modules may include an arbitrary exterior component such as a bumper or a grill, or an arbitrary interior component such as a seat or a console. Not only the vehicle 10 but also any types of moving object may be manufactured by combining a plurality of modules. Such a module may be manufactured by joining a plurality of components by welding or using a fixture, for example, or may be manufactured by forming at least part of the module integrally as a single component by casting. A process of forming at least part of a module as a single component is also called Giga-casting or Mega-casting. Giga-casting can form each part conventionally formed by joining multiple parts in a moving object as a single component. The front module, the center module, or the rear module described above may be manufactured using Giga-casting, for example.

D-21. Alternative Embodiment 21

A configuration for realizing running of a vehicle by unmanned driving is also called a "Remote Control auto Driving system". Conveying a vehicle using Remote Control Auto Driving system is also called "self-running conveyance". Producing the vehicle using self-running conveyance is also called "self-running production". In self-running production, for example, at least part of the conveyance of vehicles is realized by self-running conveyance in a factory where the vehicle is manufactured.

In each of the above-described embodiments, some or all of functions and processes realized by software may be realized by hardware. Furthermore, some or all of functions and processes realized by hardware may be realized by software. For example, any type of circuit such as an integrated circuit or a discrete circuit may be used as hardware for realizing the functions described in each of the foregoing embodiments.

The present disclosure is not limited to the embodiments described above and is able to be implemented with various configurations. For example, the technical features of any of the embodiment, the examples and the modifications corresponding to the technical features of each of the aspects described in SUMMARY may be replaced or combined appropriately, in order to solve part or all of the problems described above or in order to achieve part or all of the advantageous effects described above. When the technical features are not described as essential features in the present specification, they are able to be deleted as necessary.

**Claims**

1. A detection device (5) that detects a vehicle included in a captured image, comprising:

   an image acquisition unit (521) that acquires the captured image;
   a type acquisition unit (525) that acquires type information indicating one body type of the vehicle included in the captured image, the one body type being classified according to an exterior shape of the vehicle;

a model acquisition unit (526) that acquires, from among a plurality of first detection models (Md1) each of which is a machine learning model prepared for each of the one body type, the first detection model (Md1) selected according to the one body type identified by the type information acquired by the type acquisition unit (525); and

a detection unit (527) that detects the vehicle included in the captured image by inputting the captured image to the first detection model (Md1) acquired by the model acquisition unit (526) and identifying a target region indicating the vehicle in the captured image,

wherein each of the plurality of first detection models (Md1) is trained in advance to identify the target region by inputting a plurality of training images including M (M is an integer of 2 or more) first training images each containing the vehicle classified into the one body type and N (N is an integer of 0 or more and less than M) second training images each containing the vehicle classified into another type of the body type different from the one body type,

wherein a region correct answer label indicating either the target region or an out-of-target region indicating other than the vehicle is associated with each region in the training images,

wherein the type acquisition unit (525) acquires the type information by inputting the captured image to an identification model (Md3) being a machine learning model that has been trained to output the type information when the captured image is input.

2. A detection device (5a) that detects a vehicle included in a captured image, comprising:

an image acquisition unit (521) that acquires the captured image;

a type acquisition unit (525) that acquires type information indicating one body type of the vehicle included in the captured image, the one body type being classified according to an exterior shape of the vehicle; and

a detection unit (527a) that detects the vehicle included in the captured image by inputting the captured image and the one body type identified by the type information acquired by the type acquisition unit (525) to a second detection model (Md2) being a machine learning model and identifying a target region indicating the vehicle in the captured image,

wherein the second detection model (Md2) is trained in advance to identify the target region by inputting a plurality of training images containing the vehicle and a type correct answer label, the type correct answer label being associated with each of the plurality of training images and indicating the body type of the vehicle included in the training images,

wherein a region correct answer label indicating either the target region or an out-of-target region indicating other than the vehicle is associated with each region in the training images,

wherein the type acquisition unit (525) acquires the type information by inputting the captured image to an identification model (Md3) being a machine learning model that has been trained to output the type information when the captured image is input.

3. The detection device (5;5a) according to claim 1 or 2, wherein
the body type indicates a type of the vehicle.

4. The detection device (5;5a) according to claim 1 or 2, wherein

the vehicle moves by receiving a movement condition that defines a movement operation of the vehicle from outside the vehicle, and the type acquisition unit (525) acquires the type information by identifying the one body type of the vehicle included in the captured image using schedule information, the schedule information being associated with each imaging range of the plurality of imaging devices that acquire the captured image and indicating a scheduled time at which the vehicle classified into the one body type moves in the imaging range.

5. The detection device (5;5a) according to claim 1 or 2, further comprising
a rotation processing unit (523) that rotates the captured image such that a movement direction of the vehicle faces a predetermined direction.

6. The detection device (5;5a) according to claim 1 or 2, further comprising
a distortion correction unit (522) that corrects distortion of the captured image.

7. A position calculation system (1) that calculates a position of a vehicle included in a captured image, comprising:

the detection device (5;5a) according to claim 1 or 2
a remote control device (7); and
a position calculation device (6) that calculates the position of the vehicle, wherein
the detection device (5;5a) further masks a target region being a region indicating the vehicle in the captured image, thereby generating a first mask image in which a mask region is added to the target region, and
the position calculation device (6) comprises:

a perspective transformation unit (622) that generates a second mask image by performing perspective transformation of the first mask image;
a coordinate point calculation unit (623) that calculates a local coordinate point (P3) indicating a position of the vehicle in a local coordinate system by correcting a first coordinate point (P1) using a second coordinate point (P2), the first coordinate point (P1) being a specified vertex of a first bounding rectangle set in the mask region in the first mask image, the second coordinate point (P2) being a vertex indicating the same position as the first coordinate point (P1) in a second bounding rectangle set in the mask region in the second mask image; and
a position transformation unit (624) that transforms the local coordinate point (P3) into a vehicle coordinate point indicating a position of the vehicle in a global coordinate system using a distance of an imaging device from a reference point calculated based on a position of the imaging device in the global coordinate system and a distance of a predetermined positioning point of the vehicle from the reference point,
the remote control device (7) comprises:

an information acquisition unit (721) that acquires running information including the vehicle coordinate point; and
a control value generation unit (722) that generates, using the running information, a control value that specifies the running operation of the vehicle (10).

8. A detection method of detecting a vehicle included in a captured image, comprising:

an image acquisition step of acquiring the captured image;
a type acquisition step of acquiring type information indicating one body type of the vehicle included in the captured image, the one body type being classified according to an exterior shape of the vehicle;
a model acquisition step of acquiring, from among a plurality of first detection models (Md1) each of which is a machine learning model prepared for each of the one body type, the first detection model (Md1) selected according to the one body type identified by the type information acquired in the type acquisition step; and
a detection step of detecting the vehicle included in the captured image by inputting the captured image to the first detection model (Md1) acquired in the model acquisition step and identifying a target region indicating the vehicle in the captured image,
wherein each of the plurality of first detection models (Md1) is trained in advance to identify the target region by inputting a plurality of training images including M (M is an integer of 2 or more) first training images each containing the vehicle classified into the one body type and N (N is an integer of 0 or more and less than M) second training images each containing the vehicle classified into another type of the body type different from the one body type,
wherein a region correct answer label indicating either the target region or an out-of-target region indicating other than the vehicle is associated with each region in the training images,
wherein the type acquisition unit (525) acquires the type information by inputting the captured image to an identification model (Md3) being a machine learning model that has been trained to output the type information when the captured image is input.

9. A detection method of detecting a vehicle included in a captured image, comprising:

an image acquisition step of acquiring the captured image;
a type acquisition step of acquiring type information indicating one body type of the vehicle included in the captured image, the one body type being classified according to an exterior shape of the vehicle; and
a detection step of detecting the vehicle included in the captured image by inputting the captured image and the one body type identified by the type information acquired in the type acquisition step to a second detection model (Md2) being a machine learning model and identifying a target region indicating the vehicle in the captured image,
wherein the second detection model (Md2) is trained in advance to identify the target region by inputting a plurality of training images containing the vehicle and a type correct answer label, the type correct answer label being associated with each of the plurality of training images and indicating the body type of the vehicle included in the training images,

wherein a region correct answer label indicating either the target region or an out-of-target region indicating other than the vehicle is associated with each region in the training images, wherein the type acquisition unit (525) acquires the type information by inputting the captured image to an identification model (Md3) being a machine learning model that has been trained to output the type information when the captured image is input.

**Patentansprüche**

1. Erkennungsvorrichtung (5), die ein Fahrzeug erkennt, das in einem aufgenommenen Bild beinhaltet ist, umfassend:

   eine Bilderfassungseinheit (521), die das aufgenommene Bild erfasst;
   eine Typerfassungseinheit (525), die Typinformationen erfasst, die einen Karosserietyp des Fahrzeugs angeben, das in dem aufgenommenen Bild beinhaltet ist, wobei der Karosserietyp gemäß einer äußeren Form des Fahrzeugs klassifiziert wird;
   eine Modellerfassungseinheit (526), die, aus einer Vielzahl von ersten Erkennungsmodellen (Md1), wovon jedes ein Machine-Learning-Modell ist, das für jeden aus dem einen Karosserietyp hergestellt ist, das erste Erkennungsmodell (Md1) erfasst, ausgewählt gemäß dem einen Karosserietyp, der durch die Typinformationen identifiziert wird, die durch die Typerfassungseinheit (525) erfasst werden; und
   eine Erkennungseinheit (527), die das Fahrzeug erkennt, das in dem aufgenommenen Bild beinhaltet ist, durch Eingeben des aufgenommenen Bilds in das erste Erkennungsmodell (Md1), das durch die Modellerfassungseinheit (526) erfasst wird, und Identifizieren eines Zielbereichs, der das Fahrzeug in dem aufgenommenen Bild angibt,
   wobei jedes aus der Vielzahl von ersten Erkennungsmodellen (Md1) im Vorhinein trainiert wird, um den Zielbereich zu identifizieren, durch Eingeben einer Vielzahl von Trainingsbildern einschließlich M (M ist eine Ganzzahl von 2 oder mehr) erster Trainingsbilder, die jeweils das Fahrzeug enthalten, das in den einen Karosserietyp klassifiziert ist, und N (N ist eine Ganzzahl von 0 oder mehr und weniger als M) zweiter Trainingsbilder, die jeweils das Fahrzeug enthalten, das in einen anderen Typ des Karosserietyps klassifiziert ist, der anders als der eine Karosserietyp ist,
   wobei ein Bereichs-Referenzlabel, das entweder den Zielbereich oder einen Bereich außerhalb des Zielbereichs angibt, der etwas anderes als das Fahrzeug angibt, jedem Bereich in den Trainingsbildern zugeordnet ist,
   wobei die Typerfassungseinheit (525) die Typinformationen erfasst, durch Eingeben des aufgenommenen Bilds in ein Identifikationsmodell (Md3), das ein Machine-Learning-Modell ist, das trainiert wurde, um die Typinformationen auszugeben, wenn das aufgenommene Bild eingegeben wird.

2. Erkennungsvorrichtung (5a), die ein Fahrzeug erkennt, das in einem aufgenommenen Bild beinhaltet ist, umfassend:

   eine Bilderfassungseinheit (521), die das aufgenommene Bild erfasst;
   eine Typerfassungseinheit (525), die Typinformationen erfasst, die einen Karosserietyp des Fahrzeugs angeben, das in dem aufgenommenen Bild beinhaltet ist, wobei der Karosserietyp gemäß einer äußeren Form des Fahrzeugs klassifiziert wird; und
   eine Erkennungseinheit (527a), die das Fahrzeug erkennt, das in dem aufgenommenen Bild beinhaltet ist, durch Eingeben des aufgenommenen Bilds und des einen Karosserietyps, der durch die Typinformationen identifiziert wird, die durch die Typerfassungseinheit (525) erfasst werden, in ein zweites Erkennungsmodell (Md2), das ein Machine-Learning-Modell ist, und Identifizieren eines Zielbereichs, der das Fahrzeug in dem aufgenommenen Bild angibt,
   wobei das zweite Erkennungsmodell (Md2) im Vorhinein trainiert wird, um den Zielbereich zu identifizieren, durch Eingeben einer Vielzahl von Trainingsbildern, die das Fahrzeug und ein Typ-Referenzlabel enthalten, wobei das Typ-Referenzlabel jedem der Vielzahl von Trainingsbildern zugeordnet ist, und den Karosserietyp des Fahrzeugs angibt, das in den Trainingsbildern beinhaltet ist,
   wobei ein Bereichs-Referenzlabel, das entweder den Zielbereich oder einen Bereich außerhalb des Zielbereichs angibt, der etwas anderes als das Fahrzeug angibt, jedem Bereich in den Trainingsbildern zugeordnet ist,
   wobei die Typerfassungseinheit (525) die Typinformationen erfasst, durch Eingeben des aufgenommenen Bilds in ein Identifikationsmodell (Md3), das ein Machine-Learning-Modell ist, das trainiert wurde, um die Typinformationen auszugeben, wenn das aufgenommene Bild eingegeben wird.

3. Erkennungsvorrichtung (5; 5a) nach Anspruch 1 oder 2, wobei der Karosserietyp einen Typ des Fahrzeugs angibt.

4. Erkennungsvorrichtung (5; 5a) nach Anspruch 1 oder 2, wobei

> sich das Fahrzeug bewegt durch Empfangen eines Bewegungszustands, das einen Bewegungsvorgang des Fahrzeugs von außerhalb des Fahrzeugs definiert, und
> die Typerfassungseinheit (525) die Typinformationen erfasst, durch Identifizieren des einen Karosserietyps des Fahrzeugs, die in dem aufgenommenen Bild beinhaltet sind, unter Verwendung von Planinformationen, wobei die Planinformationen mit jedem Bildgebungsbereich der Vielzahl von Bildgebungsvorrichtungen im Zusammenhang stehen, die das aufgenommene Bild erfassen, und Angeben einer geplanten Zeit, zu der sich das Fahrzeug, das in den einen Karosserietyp klassifiziert ist, in den Bildgebungsbereich bewegt.

5. Erkennungsvorrichtung (5; 5a) nach Anspruch 1 oder 2, ferner umfassend
eine Rotationsverarbeitungseinheit (523), die das aufgenommene Bild rotiert, sodass eine Bewegungsrichtung des Fahrzeugs einer vorbestimmten Richtung zugewandt ist.

6. Erkennungsvorrichtung (5; 5a) nach Anspruch 1 oder 2, ferner umfassend
eine Verzerrungskorrektureinheit (522), die Verzerrung des aufgenommenen Bilds korrigiert.

7. Positionsberechnungssystem (1), das eine Position eines Fahrzeugs berechnet, das in einem aufgenommenen Bild beinhaltet ist, umfassend:

> die Erkennungsvorrichtung (5; 5a) nach Anspruch 1 oder 2,
> eine Fernbedienungsvorrichtung (7); und
> eine Positionsberechnungsvorrichtung (6), die die Position des Fahrzeugs berechnet, wobei die Erkennungsvorrichtung (5; 5a) ferner einen Zielbereich maskiert, der ein Bereich ist, der das Fahrzeug in dem aufgenommenen Bild angibt, wodurch ein erstes Maskenbild generiert wird, in dem ein Maskenbereich zu dem Zielbereich hinzugefügt wird, und
> die Positionsberechnungsvorrichtung (6) Folgendes umfasst:

>> eine Perspektiventransformationseinheit (622), die ein zweites Maskenbild durch Durchführen von Perspektiventransformation des ersten Maskenbilds generiert;
>> eine Koordinatenpunktberechnungseinheit (623), die einen lokalen Koordinatenpunkt (P3) berechnet, der ein Position des Fahrzeugs in einem lokalen Koordinatensystem angibt durch Korrigieren eines ersten Koordinatenpunkts (P1) unter Verwendung eines zweiten Koordinatenpunkts (P2), wobei der erste Koordinatenpunkt (P1) ein bestimmter Eckpunkt eines ersten Begrenzungsrechtecks ist, das in dem Maskenbereich in dem ersten Maskenbild eingestellt ist, wobei der zweite Koordinatenpunkt (P2) ein Eckpunkt ist, der die gleiche Position wie der erste Koordinatenpunkt (P1) in einem zweiten Begrenzungsrechteck angibt, das in dem Maskenbereich in dem zweiten Maskenbild eingestellt ist; und
eine Positionstransformationseinheit (624), die den lokalen Koordinatenpunkt (P3) in einen Fahrzeugkoordinatenpunkt umwandelt, der eine Position des Fahrzeugs in einem globalen Koordinatensystem angibt, unter Verwendung einer Distanz einer Bildgebungsvorrichtung von einem Referenzpunkt, der berechnet ist basierend auf einer Position der Bildgebungsvorrichtung in dem globalen Koordinatensystem, und einer Distanz eines vorbestimmten Positionierungspunkts des Fahrzeugs von dem Referenzpunkt,
wobei die Fernbedienungsvorrichtung (7) Folgendes umfasst:

> eine Informationenerfassungseinheit (721), die Betriebsinformationen einschließlich des Fahrzeugkoordinatenpunkts erfasst; und
> eine Kontrollwerterzeugungsvorrichtung (722), die, unter Verwendung der Betriebsinformationen, einen Kontrollwert erzeugt, der den Fahrbetrieb des Fahrzeugs (10) angibt.

8. Erkennungsverfahren des Erkennens eines Fahrzeugs, das in einem aufgenommenen Bild beinhaltet ist, umfassend:

> einen Bilderfassungsschritt des Erfassens des aufgenommenen Bilds;
> einen Typerfassungsschritt des Erfassens von Typinformationen, die einen Karosserietyp des Fahrzeugs angeben, das in dem aufgenommenen Bild beinhaltet ist, wobei der Karosserietyp gemäß einer äußeren Form des Fahrzeugs klassifiziert wird;
> einen Modellerfassungsschritt des Erfassens, aus einer Vielzahl von ersten Erkennungsmodellen (Md1), wovon jedes ein Machine-Learning-Modell ist, das für jeden aus dem einen Karosserietyp hergestellt ist, des ersten Erkennungsmodells (Md1), ausgewählt gemäß dem einen Karosserietyp, der durch die Typinformationen identifiziert wird, die durch den Typerfassungsschritt erfasst werden; und

einen Erkennungsschritt des Erkennens des Fahrzeugs, das in dem aufgenommenen Bild beinhaltet ist, durch Eingeben des aufgenommenen Bilds in das erste Erkennungsmodell (Md1), das in dem Modellerfassungsschritt erfasst wird, und Identifizieren eines Zielbereichs, der das Fahrzeug in dem aufgenommenen Bild angibt,

wobei jedes aus der Vielzahl von ersten Erkennungsmodellen (Md1) im Vorhinein trainiert wird, um den Zielbereich zu identifizieren, durch Eingeben einer Vielzahl von Trainingsbildern einschließlich M (M ist eine Ganzzahl von 2 oder mehr) erster Trainingsbilder, die jeweils das Fahrzeug enthalten, das in den einen Karosserietyp klassifiziert ist, und N (N ist eine Ganzzahl von 0 oder mehr und weniger als M) zweiter Trainingsbilder, die jeweils das Fahrzeug enthalten, das in einen anderen Typ des Karosserietyps klassifiziert ist, der anders als der eine Karosserietyp ist,

wobei ein Bereichs-Referenzlabel, das entweder den Zielbereich oder einen Bereich außerhalb des Zielbereichs angibt, der etwas anderes als das Fahrzeug angibt, jedem Bereich in den Trainingsbildern zugeordnet ist,

wobei die Typerfassungseinheit (525) die Typinformationen erfasst, durch Eingeben des aufgenommenen Bilds in ein Identifikationsmodell (Md3), das ein Machine-Learning-Modell ist, das trainiert wurde, um die Typinformationen auszugeben, wenn das aufgenommene Bild eingegeben wird.

9. Erkennungsverfahren des Erkennens eines Fahrzeugs, das in einem aufgenommenen Bild beinhaltet ist, umfassend:

einen Bilderfassungsschritt des Erfassens des aufgenommenen Bilds;

einen Typerfassungsschritt des Erfassens von Typinformationen, die einen Karosserietyp des Fahrzeugs angeben, das in dem aufgenommenen Bild beinhaltet ist, wobei der eine Karosserietyp gemäß einer äußeren Form des Fahrzeugs klassifiziert wird; und

einen Erkennungsschritt des Erkennens des Fahrzeugs, das in dem aufgenommenen Bild beinhaltet ist, durch Eingeben des aufgenommenen Bilds und des einen Karosserietyps, der durch die Typinformationen identifiziert wird, die durch den Typerfassungsschritt erfasst werden, in ein zweites Erkennungsmodell (Md2), das ein Machine-Learning-Modell ist, und Identifizieren eines Zielbereichs, der das Fahrzeug in dem aufgenommenen Bild angibt,

wobei das zweite Erkennungsmodell (Md2) im Vorhinein trainiert wird, um den Zielbereich zu identifizieren, durch Eingeben einer Vielzahl von Trainingsbildern, die das Fahrzeug und ein Typ-Referenzlabel enthalten, wobei das Typ-Referenzlabel jedem der Vielzahl von Trainingsbildern zugeordnet ist, und den Karosserietyp des Fahrzeugs angibt, das in den Trainingsbildern beinhaltet ist,

wobei ein Bereichs-Referenzlabel, das entweder den Zielbereich oder einen Bereich außerhalb des Zielbereichs angibt, der etwas anderes als das Fahrzeug angibt, jedem Bereich in den Trainingsbildern zugeordnet ist,

wobei die Typerfassungseinheit (525) die Typinformationen erfasst, durch Eingeben des aufgenommenen Bilds in ein Identifikationsmodell (Md3), das ein Machine-Learning-Modell ist, das trainiert wurde, um die Typinformationen auszugeben, wenn das aufgenommene Bild eingegeben wird.

**Revendications**

1. Dispositif de détection (5) qui détecte un véhicule présent dans une image capturée, comprenant :

une unité d'acquisition d'image (521) qui acquiert l'image capturée,

une unité d'acquisition de type (525) qui acquiert des informations de type indiquant un type de carrosserie du véhicule présent dans l'image capturée, le type de carrosserie étant classé selon la forme extérieure du véhicule,

une unité d'acquisition de modèle (526) qui acquiert, parmi une pluralité de premiers modèles de détection (Md1) dont chacun est un modèle d'apprentissage automatique préparé pour ledit type de carrosserie, le premier modèle de détection (Md1) sélectionné selon le type de carrosserie identifié par les informations de type acquises par l'unité d'acquisition de type (525), et

une unité de détection (527) qui détecte le véhicule présent dans l'image capturée en introduisant l'image capturée dans le premier modèle de détection (Md1) acquis par l'unité d'acquisition de modèle (526) et en identifiant une région cible indiquant le véhicule dans l'image capturée ;

chacun des premiers modèles de détection (Md1) étant entraîné au préalable pour identifier la région cible par introduction d'une pluralité d'images d'apprentissage comprenant M (M étant un nombre entier supérieur ou égal à 2) premières images d'apprentissage contenant chacune le véhicule classé comme appartenant audit type de carrosserie et N (N étant un nombre entier supérieur ou égal à 0 et inférieur à M) deuxièmes images d'apprentissage contenant chacune le véhicule classé comme appartenant à un autre type de carrosserie différent du premier type de carrosserie,

une étiquette de réponse correcte de région indiquant soit la région cible, soit une région hors cible indiquant autre chose que le véhicule étant associée à chaque région dans les images d'apprentissage,

l'unité d'acquisition de type (525) acquérant les informations de type en introduisant l'image capturée dans un modèle d'identification (Md3) consistant en un modèle d'apprentissage automatique ayant été entraîné pour fournir les informations de type après introduction de l'image capturée.

2. Dispositif de détection (5a) qui détecte un véhicule présent dans une image capturée, comprenant :

une unité d'acquisition d'image (521) qui acquiert l'image capturée,

une unité d'acquisition de type (525) qui acquiert des informations de type indiquant un type de carrosserie du véhicule présent dans l'image capturée, le type de carrosserie étant classé selon la forme extérieure du véhicule, et

une unité de détection (527a) qui détecte le véhicule présent dans l'image capturée en introduisant l'image capturée et le type de carrosserie identifié par les informations de type acquises par l'unité d'acquisition de type (525) dans un deuxième modèle de détection (Md2), consistant en un modèle d'apprentissage automatique, et en identifiant une région cible indiquant le véhicule dans l'image capturée ;

le deuxième modèle de détection (Md2) étant entraîné au préalable pour identifier la région cible par introduction d'une pluralité d'images d'entraînement contenant le véhicule et une étiquette de réponse correcte de type, l'étiquette de réponse correcte de type étant associée à chacune des images d'entraînement et indiquant le type de carrosserie du véhicule présent dans les images d'entraînement,

une étiquette de réponse correcte de région indiquant soit la région cible, soit une région hors cible indiquant autre chose que le véhicule étant associée à chaque région dans les images d'apprentissage,

l'unité d'acquisition de type (525) acquérant les informations de type par introduction de l'image capturée dans un modèle d'identification (Md3) consistant en un modèle d'apprentissage automatique ayant été entraîné pour fournir les informations de type après introduction de l'image capturée.

3. Dispositif de détection (5 ; 5a) selon la revendication 1 ou 2, dans lequel le type de carrosserie indique un type de véhicule.

4. Dispositif de détection (5 ; 5a) selon la revendication 1 ou 2, dans lequel

le véhicule se déplace en recevant, en provenance de l'extérieur, une condition de déplacement qui définit une opération de déplacement du véhicule, et

l'unité d'acquisition de type (525) acquiert les informations de type en identifiant le type de carrosserie du véhicule présent dans l'image capturée au moyen d'informations de planification, les informations de planification étant associées à chaque plage de prise de vue de la pluralité de dispositifs de prise de vue qui acquièrent l'image capturée et indiquant l'instant planifié auquel le véhicule classé comme appartenant audit type de carrosserie se déplace dans la plage de prise de vue.

5. Dispositif de détection (5 ; 5a) selon la revendication 1 ou 2, comprenant en outre une unité de traitement de pivotement (523) qui fait pivoter l'image capturée, de façon que la direction de déplacement du véhicule soit orientée dans une direction prédéterminée.

6. Dispositif de détection (5 ; 5a) selon la revendication 1 ou 2, comprenant en outre une unité de correction de distorsion (522) qui corrige la distorsion de l'image capturée.

7. Système de calcul de position (1) qui calcule la position d'un véhicule présent dans une image capturée, comprenant :

le dispositif de détection (5 ; 5a) selon la revendication 1 ou 2,

un dispositif de commande à distance (7), et

un dispositif de calcul de position (6) qui calcule la position du véhicule ;

ledit dispositif de détection (5 ; 5a) masquant en outre une région cible consistant en une région indiquant le véhicule dans l'image capturée, générant ainsi une première image masquée dans laquelle une région masquée est ajoutée à la région cible ;

le dispositif de calcul de position (6) comprenant :

une unité de transformation de perspective (622) qui génère une deuxième image masquée en réalisant une transformation de perspective de la première image masquée,

une unité de calcul de point de coordonnées (623) qui calcule un point de coordonnées local (P3) indiquant la position du véhicule dans un système de coordonnées local en corrigeant un premier point de coordonnées (Pl) au moyen d'un deuxième point de coordonnées (P2), le premier point de coordonnées (P1) étant un certain sommet d'un premier rectangle de délimitation défini dans la région masquée de la première image masquée, le deuxième point de coordonnées (P2) étant un sommet indiquant la même position que le premier point de coordonnées (P1) dans un deuxième rectangle de délimitation défini dans la région masquée de la deuxième image masquée, et

une unité de transformation de position (624) qui transforme le point de coordonnées local (P3) en un point de coordonnées du véhicule indiquant la position du véhicule dans un système de coordonnées global au moyen d'une distance entre un dispositif de prise de vue et un point de référence, calculée en fonction de la position du dispositif de prise de vue dans le système de coordonnées global, et d'une distance entre un point de positionnement prédéterminé du véhicule et le point de référence ;

le dispositif de commande à distance (7) comprenant :

une unité d'acquisition d'informations (721) qui acquiert des informations de fonctionnement dont le point de coordonnées du véhicule, et
une unité de génération de valeur de commande (722) qui génère, au moyen des informations de fonctionnement, une valeur de commande qui spécifie l'opération de fonctionnement du véhicule (10).

8. Procédé de détection d'un véhicule présent dans une image capturée, comprenant :

une étape d'acquisition d'image consistant à acquérir l'image capturée,
une étape d'acquisition de type consistant à acquérir des informations de type indiquant un type de carrosserie du véhicule présent dans l'image capturée, le type de carrosserie étant classé selon la forme extérieure du véhicule,
une étape d'acquisition de modèle consistant à acquérir, parmi une pluralité de premiers modèles de détection (Md1) dont chacun est un modèle d'apprentissage automatique préparé pour ledit type de carrosserie, le premier modèle de détection (Md1) sélectionné selon le type de carrosserie identifié par les informations de type acquises pendant l'étape d'acquisition de type, et
une étape de détection consistant à détecter le véhicule présent dans l'image capturée par introduction de l'image capturée dans le premier modèle de détection (Md1) acquis pendant l'étape d'acquisition de modèle et par identification d'une région cible indiquant le véhicule dans l'image capturée ;

chacun des premiers modèles de détection (Md1) étant entraîné au préalable pour identifier la région cible par introduction d'une pluralité d'images d'apprentissage comprenant M (M étant un nombre entier supérieur ou égal à 2) premières images d'apprentissage contenant chacune le véhicule classé comme appartenant audit type de carrosserie et N (N étant un nombre entier supérieur ou égal à 0 et inférieur à M) deuxièmes images d'apprentissage contenant chacune le véhicule classé comme appartenant à un autre type de carrosserie différent du premier type de carrosserie,
une étiquette de réponse correcte de région indiquant soit la région cible, soit une région hors cible indiquant autre chose que le véhicule étant associée à chaque région dans les images d'apprentissage,
l'unité d'acquisition de type (525) acquérant les informations de type en introduisant l'image capturée dans un modèle d'identification (Md3) consistant en un modèle d'apprentissage automatique ayant été entraîné pour fournir les informations de type après introduction de l'image capturée.

9. Procédé de détection d'un véhicule présent dans une image capturée, comprenant :

une étape d'acquisition d'image consistant à acquérir l'image capturée,
une étape d'acquisition de type consistant à acquérir des informations de type indiquant un type de carrosserie du véhicule présent dans l'image capturée, le type de carrosserie étant classé selon la forme extérieure du véhicule, et
une étape de détection consistant à détecter le véhicule présent dans l'image capturée par introduction de l'image capturée et du type de carrosserie identifié par les informations de type acquises pendant l'étape d'acquisition de type dans un deuxième modèle de détection (Md2) consistant en un modèle d'apprentissage automatique, et par identification d'une région cible indiquant le véhicule dans l'image capturée ;

le deuxième modèle de détection (Md2) étant entraîné au préalable pour identifier la région cible par introduction d'une pluralité d'images d'entraînement contenant le véhicule et d'une étiquette de réponse correcte de type, l'étiquette de réponse correcte de type étant associée à chacune des images d'entraînement et indiquant le type de carrosserie du véhicule présent dans les images d'entraînement,

une étiquette de réponse correcte de région indiquant soit la région cible, soit une région hors cible indiquant autre chose que le véhicule étant associée à chaque région dans les images d'apprentissage,

l'unité d'acquisition de type (525) acquérant les informations de type par introduction de l'image capturée dans un modèle d'identification (Md3) consistant en un modèle d'apprentissage automatique ayant été entraîné pour fournir les informations de type après introduction de l'image capturée.

Fig.1

EP 4 481 593 B1

## Fig.2

DETECTION DEVICE ⌐5

STORAGE UNIT ⌐53

FIRST DETECTION MODEL ~Md1c ~Md1b }Md1 ~Md1a

IDENTIFICATION MODEL ~Md3

DISTORTION CORRECTION PARAMETER ~Pa1

COMMUNICATION UNIT ⌐51

CPU ⌐52

32

Fig.3

52

CPU

| IMAGE ACQUISITION UNIT | ~ 521 |
| DISTORTION CORRECTION UNIT | ~ 522 |
| ROTATION PROCESSING UNIT | ~ 523 |
| TRIMMING UNIT | ~ 524 |

| TYPE ACQUISITION UNIT | ~ 525 |
| MODEL ACQUISITION UNIT | ~ 526 |
| DETECTION UNIT | ~ 527 |
| FIRST TRANSMISSION UNIT | ~ 528 |

Fig.4

POSITION CALCULATION DEVICE ~ 6

CPU ~ 62

DATA ACQUISITION UNIT ~ 621

PERSPECTIVE TRANSFORMATION UNIT ~ 622

COORDINATE POINT CALCULATION UNIT ~ 623

POSITION TRANSFORMATION UNIT ~ 624

SECOND TRANSMISSION UNIT ~ 625

COMMUNICATION UNIT ~ 61

STORAGE UNIT ~ 63

PERSPECTIVE TRANSFORMATION PARAMETER ~ Pa2

CAMERA DATABASE ~ Db

EP 4 481 593 B1

# Fig.5

REMOTE CONTROL DEVICE ⌐72 ⌐7

CPU

| INFORMATION ACQUISITION UNIT | ~721 |

| CONTROL VALUE GENERATION UNIT | ~722 |

| THIRD TRANSMISSION UNIT | ~723 |

COMMUNICATION UNIT ⌐71

STORAGE UNIT ⌐73

## Fig.6

```
                    ┌─────────────┐
                    │    START    │
                    └──────┬──────┘
                           ↓
          ┌────────────────────────────────┐
          │    IMAGE ACQUISITION STEP      │ ∿ S1
          └────────────────┬───────────────┘
                           ↓
          ┌────────────────────────────────┐
          │   DISTORTION CORRECTION STEP   │ ∿ S2
          └────────────────┬───────────────┘
                           ↓
          ┌────────────────────────────────┐
          │   ROTATION PROCESSING STEP     │ ∿ S3
          └────────────────┬───────────────┘
                           ↓
          ┌────────────────────────────────┐
          │        TRIMMING STEP           │ ∿ S4
          └────────────────┬───────────────┘
                           ↓
          ┌────────────────────────────────┐
          │     TYPE ACQUISITION STEP      │ ∿ S5
          └────────────────┬───────────────┘
                           ↓
          ┌────────────────────────────────┐
          │     MODEL ACQUISITION STEP     │ ∿ S6
          └────────────────┬───────────────┘
                           ↓
          ┌────────────────────────────────┐
          │        DETECTION STEP          │ ∿ S7
          └────────────────┬───────────────┘
                           ↓
          ┌────────────────────────────────┐
          │  PERSPECTIVE TRANSFORMATION STEP │ ∿ S8
          └────────────────┬───────────────┘
                           ↓
          ┌────────────────────────────────┐
          │ COORDINATE POINT CALCULATION STEP │ ∿ S9
          └────────────────┬───────────────┘
                           ↓
          ┌────────────────────────────────┐
          │  POSITION TRANSFORMATION STEP  │ ∿ S10
          └────────────────┬───────────────┘
                           ↓
                    ┌─────────────┐
                    │     END     │
                    └─────────────┘
```

Fig.7

STEP S1 — Im1

STEP S2 — Im2

STEP S3 — Im3 (A1, A2)

STEP S4 — Im4

STEP S7 — Im5 (Ms)

STEP S8 — Im6 (Ms)

Fig.8

EP 4 481 593 B1

Fig.9

ROTATION

INVERSE ROTATION

EP 4 481 593 B1

Fig.10

EP 4 481 593 B1

Fig.11

Fig.12A

SERVER

VEHICLE

```
      ┌──────────────┐
      │    START     │
      └──────┬───────┘
             │          ┌─ S11
      ┌──────▼──────────────────────────┐
      │ ACQUIRE VEHICLE LOCATION INFORMATION │
      └──────┬──────────────────────────┘
             │          ┌─ S12
      ┌──────▼──────────┐
      │ DETERMINE NEXT   │
      │ TARGET LOCATION  │
      └──────┬──────────┘
             │          ┌─ S13
      ┌──────▼──────────┐
      │ GENERATE RUNNING │
      │ CONTROL SIGNAL   │
      └──────┬──────────┘
             │          ┌─ S14
      ┌──────▼──────────────┐
      │ TRANSMIT RUNNING CONTROL │
      │ SIGNAL TO VEHICLE        │
      └──────┬──────────────┘
             │
      ┌──────▼───────┐
      │     END      │
      └──────────────┘
```

```
      ┌──────────────┐
      │    START     │
      └──────┬───────┘
             │          ┌─ S15
      ┌──────▼──────────────┐
      │ RECEIVE RUNNING CONTROL │
      │ SIGNAL FROM SERVER      │
      └──────┬──────────────┘
             │          ┌─ S16
      ┌──────▼──────────────┐
      │ CONTROL ACTUATOR USING  │
      │ RUNNING CONTROL SIGNAL  │
      └──────┬──────────────┘
             │
      ┌──────▼───────┐
      │     END      │
      └──────────────┘
```

EP 4 481 593 B1

# Fig.12B

Fig.13

Fig.14

52a

CPU

| IMAGE ACQUISITION UNIT | ~ 521 |
| DISTORTION CORRECTION UNIT | ~ 522 |
| ROTATION PROCESSING UNIT | ~ 523 |
| TRIMMING UNIT | ~ 524 |

| TYPE ACQUISITION UNIT | ~ 525 |
| MODEL ACQUISITION UNIT | ~ 526a |
| DETECTION UNIT | ~ 527a |
| FIRST TRANSMISSION UNIT | ~ 528 |

## Fig.15

```
                    ┌─────────────┐
                    │    START    │
                    └──────┬──────┘
                           ↓
          ┌──────────────────────────────┐
          │    IMAGE ACQUISITION STEP     ├──── S1
          └──────────────┬───────────────┘
                         ↓
          ┌──────────────────────────────┐
          │  DISTORTION CORRECTION STEP   ├──── S2
          └──────────────┬───────────────┘
                         ↓
          ┌──────────────────────────────┐
          │   ROTATION PROCESSING STEP    ├──── S3
          └──────────────┬───────────────┘
                         ↓
          ┌──────────────────────────────┐
          │        TRIMMING STEP          ├──── S4
          └──────────────┬───────────────┘
                         ↓
          ┌──────────────────────────────┐
          │     TYPE ACQUISITION STEP     ├──── S5
          └──────────────┬───────────────┘
                         ↓
          ┌──────────────────────────────┐
          │    MODEL ACQUISITION STEP     ├──── S6a
          └──────────────┬───────────────┘
                         ↓
          ┌──────────────────────────────┐
          │        DETECTION STEP         ├──── S7
          └──────────────┬───────────────┘
                         ↓
          ┌──────────────────────────────┐
          │ PERSPECTIVE TRANSFORMATION STEP├──── S8
          └──────────────┬───────────────┘
                         ↓
          ┌──────────────────────────────┐
          │COORDINATE POINT CALCULATION STEP├──── S9
          └──────────────┬───────────────┘
                         ↓
          ┌──────────────────────────────┐
          │  POSITION TRANSFORMATION STEP ├──── S10
          └──────────────┬───────────────┘
                         ↓
                  ┌─────────────┐
                  │     END     │
                  └─────────────┘
```

Fig.16

EP 4 481 593 B1

# Fig.17

150v

**CPU**

| IMAGE ACQUISITION UNIT | ~521 |
| DISTORTION CORRECTION UNIT | ~522 |
| ROTATION PROCESSING UNIT | ~523 |
| TRIMMING UNIT | ~524 |
| DATA ACQUISITION UNIT | ~621 |
| COORDINATE POINT CALCULATION UNIT | ~623 |
| SECOND TRANSMISSION UNIT | ~625 |

| TYPE ACQUISITION UNIT | ~525 |
| MODEL ACQUISITION UNIT | ~526 |
| DETECTION UNIT | ~527 |
| FIRST TRANSMISSION UNIT | ~528 |
| PERSPECTIVE TRANSFORMATION UNIT | ~622 |
| POSITION TRANSFORMATION UNIT | ~624 |

151

154 —

153

152

**INPUT/OUTPUT INTERFACE**

**STORAGE UNIT**

| PROGRAM | ~PG1 |

| FIRST DETECTION MODEL | ~Md1c ~Md1b }Md1 ~Md1a |
| IDENTIFICATION MODEL | ~Md3 |
| DISTORTION CORRECTION PARAMETER | ~Pa1 |
| PERSPECTIVE TRANSFORMATION PARAMETER | ~Pa2 |
| CAMERA DATABASE | ~Db |

# Fig.18

<u>VEHICLE</u>

```
         ┌──────────────────┐
         │      START        │
         └──────────────────┘
                  │
                  ▼           ┌─ S901
   ┌──────────────────────────────────────┐
   │ ACQUIRE VEHICLE LOCATION INFORMATION USING │
   │ DETECTION RESULT FROM EXTERNAL SENSOR      │
   └──────────────────────────────────────┘
                  │
                  ▼           ┌─ S902
   ┌──────────────────────────────────────┐
   │           DETERMINE NEXT              │
   │           TARGET LOCATION             │
   └──────────────────────────────────────┘
                  │
                  ▼           ┌─ S903
   ┌──────────────────────────────────────┐
   │          GENERATE RUNNING             │
   │          CONTROL SIGNAL               │
   └──────────────────────────────────────┘
                  │
                  ▼           ┌─ S904
   ┌──────────────────────────────────────┐
   │        CONTROL ACTUATOR USING         │
   │        RUNNING CONTROL SIGNAL         │
   └──────────────────────────────────────┘
                  │
                  ▼
         ┌──────────────────┐
         │       END         │
         └──────────────────┘
```

**EP 4 481 593 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017538619 W
- WO 2022155671 A1

- US 2017345180 A1, SUGIURA TAKAYUKI

**Non-patent literature cited in the description**

- Coupled Object Detection and Tracking from Static Cameras and Moving Vehicles. **LEIBE B et al.** IEEE TRANSACTIONS ON PATTERN ANALYSIS AND MACHINE INTELLIGENCE. IEEE COMPUTER SOCIETY, 01 October 2008, vol. 30, 1683-1698